# EUROPEAN PATENT APPLICATION

(11) **EP 4 737 198 A1**
(43) Date of publication of application: **06.05.2026**
(21) Application number: 24831321.5
(22) Date of filing: 22.02.2024
(51) Int. Cl.: B60L 53/68, B60L 3/00, G06F 21/57, G16Y 10/40, G16Y 40/50, H02J 7/00

(54) **CHARGE CONTROL METHOD, CHARGE CONTROL DEVICE, AND PROGRAM**

(30) Priority: 29.06.2023 JP 2023107320
(71) Applicant: Panasonic Intellectual Property Management Co., Ltd., Kadoma-shi, Osaka 571-0057 (JP)
(72) Inventor: TASAKI, Hajime, Kadoma-shi, Osaka 571-8501 (JP); YAMAGUCHI, Takahiro, Kadoma-shi, Osaka 571-8501 (JP); HAGA, Tomoyuki, Kadoma-shi, Osaka 571-8501 (JP)
(74) Representative: Grünecker Patent- und Rechtsanwälte PartG mbB
(86) International application number: PCT/JP2024/006580
(87) International publication number: WO 2025/004441

(57) **Abstract**

A charge control method according to the present disclosure is used in a charge control device communicably connected to each of an electric vehicle and a charging facility, determines, based on software information including at least firmware information of an electronic control device mounted on the electric vehicle, presence or absence of a security risk to a plurality of driving control functions of the electric vehicle arising from firmware, and whether a second driving control function enables traveling and the security risk of the electric vehicle is avoidable after at least one driving control function having the security risk is disabled, and when the second driving control function enables traveling and the security risk is avoided after the at least one driving control function is disabled, permits power supply of a power supply apparatus of the charging facility to the electric vehicle after disabling the at least one driving control function.

## Description

### TECHNICAL FIELD

The present disclosure relates to a charge control method, a charge control device, and a program.

### BACKGROUND ART

A technology is known that protects a plurality of in-vehicle computers such as electronic control units (ECUs) for controlling a vehicle, from a security risk affecting vehicle control such as unauthorized communication.

### CITATION LIST

### Patent Literature

Patent Literature 1: JP 2020-065243 A
Patent Literature 2: JP 2020-125036 A

### SUMMARY OF INVENTION

### PROBLEM TO BE SOLVED BY THE INVENTION

Under such circumstances, an in-vehicle computer to which the latest update patch is not applied has a risk that the safeties of a vehicle and a driver are threatened, for example, a security risk against which measures are not taken is exploited for unauthorized operation of a function of the vehicle.

One of the problems to be solved by the present disclosure is to protect an electric vehicle connected to a charging facility upon power supply, from a security risk arising from the electric vehicle.

### MEANS FOR SOLVING PROBLEM

A charge control method according to an aspect of the present disclosure is used in a charge control device communicably connected to each of an electric vehicle and a power supply apparatus configured to charge the electric vehicle, and includes: performing, based on software information including at least firmware information of an electronic control device mounted on the electric vehicle, a first determination to determine presence or absence of a security risk to a plurality of driving control functions of the electric vehicle arising from firmware of the electronic control device, and a second determination to determine, when a determination result of the first determination indicates presence of the security risk, whether after at least one driving control function having the security risk from among the plurality of the driving control functions is disabled, a second driving control function from among the plurality of the driving control functions enables traveling and the security risk of the electric vehicle is avoidable; and permitting power supply of the power supply apparatus to the electric vehicle after disabling the at least one driving control function when the second driving control function enables traveling and the security risk is avoidable after the at least one driving control function is disabled.

### EFFECT OF THE INVENTION

According to the present disclosure, it is possible to protect the electric vehicle connected to the charging facility upon power supply, from the security risk arising from the electric vehicle.

### BRIEF DESCRIPTION OF DRAWINGS

FIG. 1 is a diagram illustrating an exemplary configuration of a charging system according to a first embodiment;
FIG. 2 is a diagram illustrating an exemplary configuration of a charging facility according to the first embodiment;
FIG. 3 is a diagram illustrating an exemplary configuration of a charging station management terminal according to the first embodiment;
FIG. 4 is a diagram illustrating an exemplary configuration of a charging station management server according to the first embodiment;
FIG. 5 is a diagram illustrating an exemplary configuration of a charge control unit according to the first embodiment;
FIG. 6 is a diagram illustrating an exemplary configuration of an electric vehicle according to the first embodiment;
FIG. 7 is a diagram illustrating an exemplary configuration of a vehicle management server according to the first embodiment;
FIG. 8 is a diagram illustrating an example of vehicle software configuration information according to the first embodiment;
FIG. 9 is a diagram illustrating an example of vehicle management information according to the first embodiment;
FIG. 10A is a flowchart illustrating an example of a power supply process triggered by vehicle detection, performed in the charge control unit according to the first embodiment;
FIG. 10B is a flowchart illustrating an example of the power supply process triggered by vehicle detection, performed in the charge control unit according to the first embodiment;
FIG. 11 is a flowchart illustrating an example of a verification process for reconnecting a power supply apparatus to a facility communication network, performed in the charge control unit according to the first embodiment;
FIG. 12 is a sequence diagram illustrating an example of a power supply process triggered by vehicle detection, performed in the charging system according to the first embodiment;
FIG. 13 is a sequence diagram illustrating an example of a verification process for reconnecting the power supply apparatus to the facility communication network, performed in the charging system according to the first embodiment;
FIG. 14 is a diagram illustrating an exemplary configuration of a charging system according to a second embodiment;
FIG. 15 is a flowchart illustrating an example of a power supply process triggered by a charge reservation, performed in a charge control unit and a reservation management unit according to a third embodiment;
FIG. 16 is a sequence diagram illustrating an example of a power supply process triggered by a charge reservation, performed in a charging system according to the third embodiment;
FIG. 17 is a diagram illustrating an exemplary configuration of a charging facility according to a fourth embodiment;
FIG. 18 is a diagram illustrating an exemplary configuration of a charge control unit according to the fourth embodiment;
FIG. 19 is a diagram illustrating an example of vehicle software configuration information according to the fourth embodiment;
FIG. 20 is a diagram illustrating an example of vehicle management information according to the fourth embodiment;
FIG. 21 is a diagram illustrating an example of corresponding functions of ECU related to autonomous driving control according to the fourth embodiment;
FIG. 22 is a diagram illustrating an example of corresponding functions of the ECU related to manual driving control according to the fourth embodiment;
FIG. 23 is a flowchart illustrating an example of a power supply process triggered by vehicle detection, performed in the charge control unit according to the fourth embodiment;
FIG. 24 is a sequence diagram illustrating an example of a power supply process triggered by vehicle detection, performed in a charging system according to the fourth embodiment;
FIG. 25 is a flowchart illustrating an example of a power supply process triggered by a charge reservation, performed in a charge control unit and a reservation management unit according to a fifth embodiment; and
FIG. 26 is a sequence diagram illustrating an example of a power supply process triggered by a charge reservation, performed in a charging system according to the fifth embodiment.

### DESCRIPTION OF EMBODIMENTS

Embodiments of a charging system, a charge control method, a charge control device, a program, and a recording medium according to the present disclosure will be described with reference to the drawings.

Note that in the description of the present disclosure, component elements having the same or substantially the same functions as those having been described with reference to previous drawings are denoted by the same reference numerals, and the description thereof is appropriately omitted, in some cases. In addition, even when the same or substantially the same portions are illustrated, the dimensions and ratios may be represented differently from each other depending on drawings. Furthermore, for example, from the viewpoint of ensuring visibility of the drawings, only main component elements are denoted by reference numerals in description of the drawings, and even if component elements having the same or substantially the same functions as those having been illustrated in previous drawings are illustrated, the component elements may not be denoted by reference numerals.

Note that in the description of the present disclosure, component elements having the same or substantially the same functions may be distinguished from each other by reference numerals followed by alphanumeric characters. Alternatively, when a plurality of the component elements having the same or substantially the same functions are not distinguished, the component elements may be collectively described by the reference numerals without the alphanumeric characters.

### (First Embodiment)

A technology is known that protects a plurality of in-vehicle computers such as electronic control units (ECUs) for controlling a vehicle, from a security risk affecting vehicle control such as unauthorized communication.

Under such circumstances, vehicles driven by using electric power from batteries, such as electric vehicles, are connected to charging facilities via, for example, charging cables for charging. In addition, some of the charging cables provide communication therethrough, for charge control. Therefore, when an in-vehicle computer has a security risk, a charging facility may also be affected.

Therefore, in the present embodiment, a description will be made of a charging system that is configured to protect a charging facility connected to an electric vehicle upon power supply, from a security risk arising from the electric vehicle.

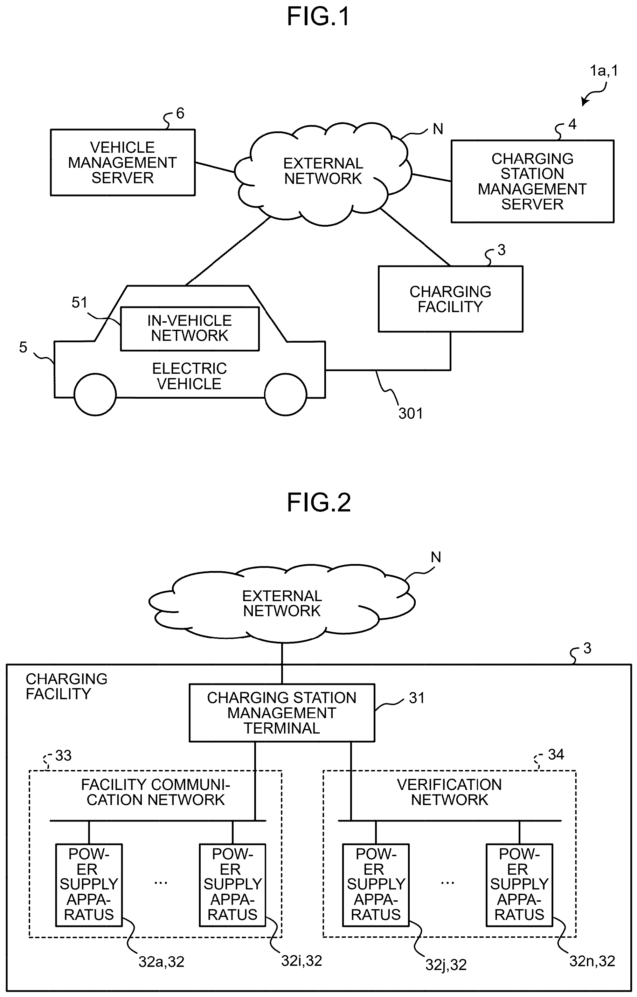

FIG. 1 is a diagram illustrating an exemplary configuration of a charging system 1a according to a first embodiment. The charging system 1a includes a charging facility 3, a charging station management server 4, an electric vehicle 5, and a vehicle management server 6. Here, the charging system 1a according to the first embodiment is an example of a charging system 1 according to an embodiment of the present disclosure.

Each of the charging facility 3, the charging station management server 4, the electric vehicle 5, and the vehicle management server 6 is communicably connected to an external network N.

The charging facility 3 is configured to enable charging for power supply to a battery mounted on the electric vehicle 5. The charging facility 3 is installed in a charging station, and provides a charging service to the electric vehicle 5 visiting the charging station. In other words, in the present disclosure, the charging station is a facility including the charging facility 3 installed therein and configured to perform charging of the visiting electric vehicle 5. The charging station may be installed as a dedicated facility for charging the electric vehicle 5, or may be installed as a facility that colocates the charging facility 3 and another facility such as a parking lot where the electric vehicle 5 can be parked.

FIG. 2 is a diagram illustrating an exemplary configuration of the charging facility 3 according to the first embodiment. The charging facility 3 includes a charging station management terminal 31 and a plurality of power supply apparatuses 32.

FIG. 2 illustrates, as the plurality of power supply apparatuses 32, power supply apparatuses 32a to 32i connected to a facility communication network 33 and power supply apparatuses 32j to 32n connected to a verification network 34. Here, the facility communication network 33 according to the embodiment is an example of a communication network. Note that the number of the power supply apparatuses 32 provided in the charging facility 3 can be changed as appropriate, and may be one or two or more.

Here, the facility communication network 33 is a network for performing communication between the charging station management terminal 31 and each of the plurality of power supply apparatuses 32. Furthermore, the verification network 34 is a network that is separated from the facility communication network 33, and is a network for verifying whether a power supply apparatus 32 connected to an electric vehicle 5 having the security risk has unauthorized modification. Note that it is preferable for the facility communication network 33 and the verification network 34 to be physically isolated in hardware, but a configuration isolated by software can also be used.

The charging station management terminal 31 is connected to the charging station management server 4 via the external network N. The charging station management terminal 31 is connected to each of the plurality of power supply apparatuses 32 via the facility communication network 33 or the verification network 34.

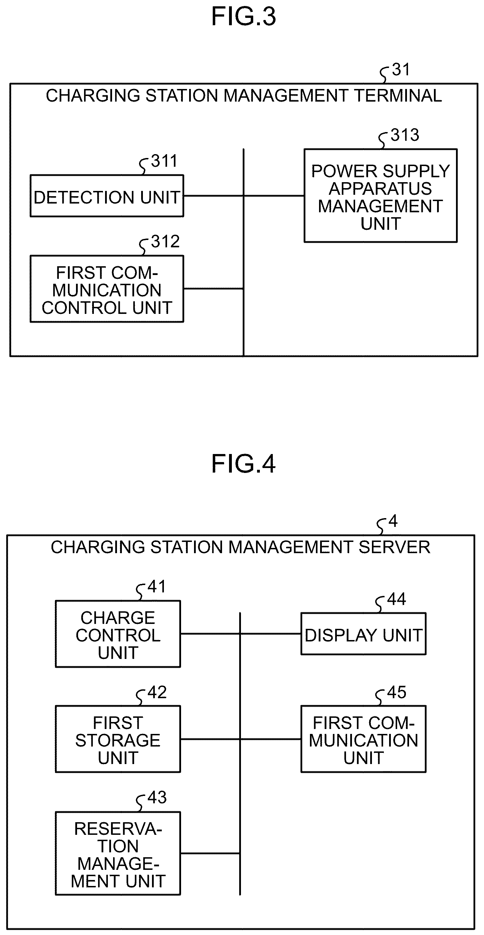

FIG. 3 is a diagram illustrating an exemplary configuration of the charging station management terminal 31 according to the first embodiment. The charging station management terminal 31 includes a processor and a memory, and has a hardware configuration using a general computer. The processor executes a program loaded into a memory such as a random access memory (RAM) to implement each of a detection unit 311, a first communication control unit 312, and a power supply apparatus management unit 313. As the processor, various processors such as a central processing unit (CPU), a graphics processing unit (GPU), an application specific integrated circuit (ASIC), and a field programmable gate array (FPGA) can be used as appropriate. As the memory, various recording media and storage devices such as RAM, a read only memory (ROM), a hard disk drive (HDD), a solid state drive (SSD), and a flash memory can be used as appropriate.

The detection unit 311 of the charging station management terminal 31 detects an electric vehicle 5 to be charged. Furthermore, when the electric vehicle 5 to be charged is detected, the first communication control unit 312 outputs a detection notification to the charging station management server 4. The detection notification includes vehicle identification information for identifying the detected electric vehicle 5.

For example, the detection unit 311 may detect the electric vehicle 5 to be charged, on the basis of an image captured in the charging station. For example, the detection unit 311 acquires a captured image of at least a license plate of the electric vehicle 5, performs image analysis, for example, character recognition, on the acquired image, and acquires a license plate number of the electric vehicle 5 as the vehicle identification information. Note that the image analysis on the acquired image may be performed outside the charging station management terminal 31, for example, in the charging station management server 4. For example, the image analysis may be performed by edge detection processing, or may be performed using a machine learning model such as convolutional neural network (CNN). When the machine learning model is used, in the machine learning model, for example, parameters may be determined so as to output features related to the vehicle, according to an input of the image in which the vehicle is included. The features related to the vehicle are, for example, at least one of the shape and size, license plate number, and body color of the vehicle, but may be other information. Note that the image analysis may be performed using another model other than the machine learning model.

Note that the charging system 1a according to the embodiment may further include a camera configured to enable capturing at least the license plate of the electric vehicle 5. The camera may be arranged in the charging station in which the power supply apparatuses 32 are installed, for example, at each of the power supply apparatuses 32 or a vehicle gate of the charging station. Alternatively, the charging system 1a according to the embodiment may be configured to acquire an image from an external camera configured to enable capturing at least the license plate of the electric vehicle 5. For the external camera, for example, a monitoring camera or the like provided at an installation place of the power supply apparatuses 32 can be appropriately used, when a parking lot and the charging facility 3 are co-located.

Note that in order to obtain the captured image of at least the license plate of the electric vehicle 5, the camera may be configured to capture an image, for example, when the electric vehicle 5 is stopped in an area determined according to the position of each power supply apparatus 32 in advance, when the power supply apparatus 32 is operated, or when the electric vehicle 5 is connected by a connection member 301. In addition, the charging system 1a may be separately provided with a sensor configured to enable detection of the electric vehicle 5 in the area determined according to the position of the power supply apparatus 32 in advance. Note that in the configuration where the captured image of at least the license plate of the electric vehicle 5 is obtained in response to the electric vehicle 5 being connected by the connection member 301, it is assumed that power and communication between the electric vehicle 5 and the power supply apparatus 32 are shut off upon connection of the electric vehicle 5 by the connection member 301.

Here, the connection member 301 is a member for power supply from the power supply apparatus 32 of the charging facility 3 to the electric vehicle 5 and for communication between the power supply apparatus 32 and the electric vehicle 5. For example, the power supply apparatus 32 and the electric vehicle 5 are removably connected using the connection member 301. The connection member 301 is constituted using elements such as a cable and a connector. Note that the connection member 301 may be a member belonging to either the charging facility 3 or the electric vehicle 5. The power supply from the power supply apparatus 32 to the electric vehicle 5 and the communication between the power supply apparatus 32 and the electric vehicle 5 are implemented by, for example, the connection member 301 in common, but may be implemented by connection members 301 of different systems. Communication between the power supply apparatus 32 and the electric vehicle 5 is not limited to wired communication via the connection member 301, and may be performed by wireless communication. For the wireless communication, communication supporting various standards such as 4G, 5G, 6G, Wi-Fi (registered trademark), and Bluetooth (registered trademark) can be used as appropriate.

Furthermore, for example, the detection unit 311 may detect the electric vehicle 5 to be charged, on the basis of check-in by a user at the charging station. In this configuration, the detection unit 311 preferably acquires authentication information upon check-in, as the vehicle identification information. Here, the check-in at the charging station is a user authentication process performed by using a card issued to a user or the like having been registered for the charging service, an application program installed in a mobile terminal used by the user such as a smartphone, an in-vehicle terminal such as a car navigation system, or the like. The authentication information as the vehicle identification information includes, for example, at least one of user information having been input upon check-in and user information having been used for authentication upon check-in. In addition, the authentication information as the vehicle identification information includes vehicle information for identifying the electric vehicle 5 input by the user upon registration to the charging service, at an any time point after registration, or upon check-in. Note that one user may own a plurality of electric vehicles 5. Therefore, for example, the user is allowed to specify the electric vehicle 5 to be charged, for example, upon check-in.

The power supply apparatus management unit 313 operates the power supply apparatus 32 to which the electric vehicle 5 is connected, according to an instruction from the charging station management server 4.

The power supply apparatus management unit 313 degrades the functions of the charging facility 3, according to an instruction from the charging station management server 4. For example, the power supply apparatus management unit 313 disconnects a target power supply apparatus 32 from the facility communication network 33. For example, the power supply apparatus management unit 313 connects the target power supply apparatus 32 to the verification network 34. For example, the power supply apparatus management unit 313 reconnects the target power supply apparatus 32 to the facility communication network 33. In an example, when there is no unauthorized modification in first verification by a first verification unit 416, the power supply apparatus management unit 313 reconnects the power supply apparatus 32 to the facility communication network 33. In an example, even when there is an unauthorized modification in the first verification, the power supply apparatus management unit 313 reconnects the power supply apparatus 32 to the facility communication network 33 when there is no unauthorized operation in second verification. In other words, the power supply apparatus management unit 313 switches a connection destination of the target power supply apparatus 32 between the facility communication network 33 and the verification network 34. For example, the power supply apparatus management unit 313 restricts a power supply rate. For example, the power supply apparatus management unit 313 restricts a vehicle communication function of communication with the electric vehicle 5 via the connection member 301. Here, to restrict the vehicle communication function is, for example, to restrict communication between the electric vehicle 5 and the outside of the charging system 1a.

Each of the plurality of power supply apparatuses 32 is removably connected to the electric vehicle 5 via the connection member 301, and is configured to enable power supply to the connected electric vehicle 5 and communication with the electric vehicle 5. Each of the plurality of power supply apparatuses 32 includes a communication interface for connecting to the facility communication network 33, a communication interface for connecting to the verification network 34, a connection interface for connecting to the electric vehicle 5 via the connection member 301, a connection interface for connecting to a power supply device or an external power supply, and a control device for controlling the operation of the its own apparatus.

The control device of the power supply apparatus 32 includes a processor and a memory, and has a hardware configuration using a general computer. The processor executes a program loaded into the memory such as RAM to implement each function of the power supply apparatus 32. For the processor, various processors such as CPU, GPU, ASIC, and FPGA can be used as appropriate. For the memory, various recording media and recording devices such as RAM, ROM, HDD, SSD, and a flash memory can be used as appropriate.

In an example, the power supply apparatus 32 supplies power to the electric vehicle 5 connected to the power supply apparatus 32, under the control of the power supply apparatus management unit 313 of the charging station management terminal 31.

The charging station management server 4 is communicably connected to each of the charging facility 3, the electric vehicle 5, and the vehicle management server 6, via the external network N. The charging station management server 4 is configured to enable control of power supply to the electric vehicle 5 by the charging facility 3. The charging station management server 4 is installed, for example, in a place different from that of the charging station, but may be installed in the charging station similarly to the charging facility 3. Furthermore, the charging facility 3 and the charging station management server 4 may be integrally configured. Alternatively, for example, some of the functions of the charging station management server 4 such as a charge control unit 41 may be implemented by the charging station management terminal 31 of the charging facility 3. Similarly, some of the functions of the charging station management terminal 31 may be implemented in the charging station management server 4. The charging station management server 4 is operated by, for example, the same company as the charging facility 3, but may be operated by a different company.

FIG. 4 is a diagram illustrating an exemplary configuration of the charging station management server 4 according to the first embodiment. The charging station management server 4 includes the charge control unit 41, a first storage unit 42, a reservation management unit 43, a display unit 44, and a first communication unit 45.

The charging station management server 4 includes a processor and a memory, and has a hardware configuration using a general computer. The processor executes a program loaded into the memory such as RAM to implement each of the charge control unit 41 and the reservation management unit 43. For the processor, various processors such as CPU, GPU, ASIC, and FPGA can be used as appropriate. For the memory, various recording media and recording devices such as RAM, ROM, HDD, SSD, and a flash memory can be used as appropriate. Note that each of the charge control unit 41 and the reservation management unit 43 may have a hardware configuration using a general computer, as an independent device, such as having a processor and a memory.

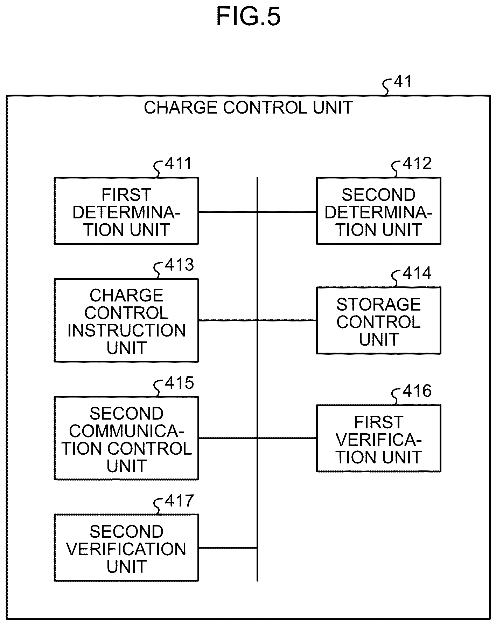

The charge control unit 41 performs charge control based on the security risk of the electric vehicle 5 to be charged. FIG. 5 is a diagram illustrating an exemplary configuration of the charge control unit 41 according to the first embodiment. The charge control unit 41 includes a first determination unit 411, a second determination unit 412, a charge control instruction unit 413, a storage control unit 414, a second communication control unit 415, the first verification unit 416, and a second verification unit 417.

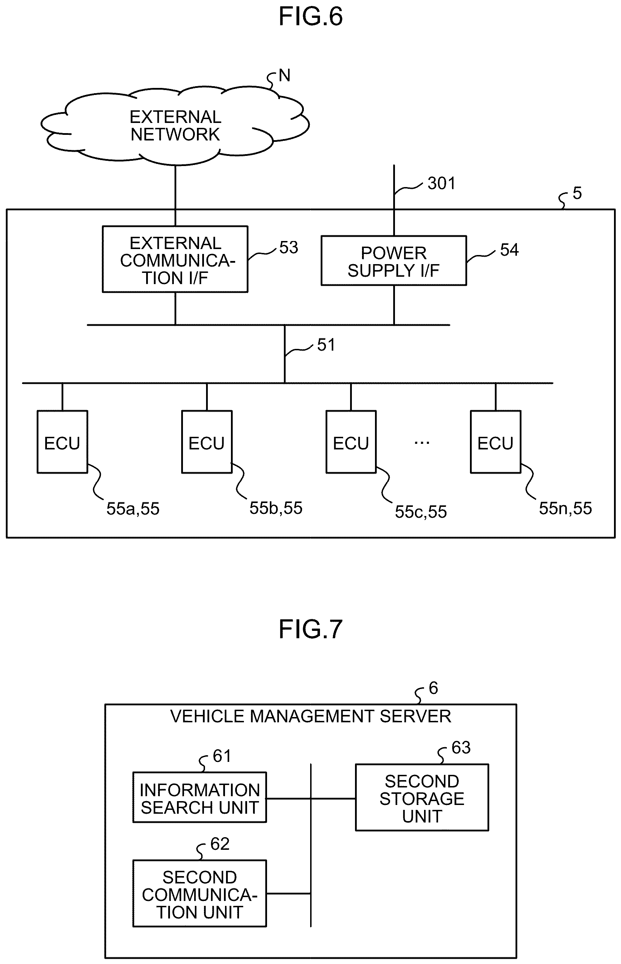

The first determination unit 411 performs a first determination to determine the presence or absence of the security risk or a threat of the electric vehicle 5 to a charging function. In an example, the first determination includes a determination of the presence or absence of the security risk of the electric vehicle 5 to the charging function that arises from the FW of the ECU, on the basis of vehicle software configuration information (see FIG. 7) including at least an ECUFW (firmware) version of the ECU mounted on the electric vehicle 5.

The second determination unit 412 performs a second determination to determine whether charging is possible or whether avoidance of the security risk to the charging function is required. In an example, the second determination includes a determination of whether the security risk to the charging facility 3 can be avoided by degrading the functions of the power supply apparatus 32 on the basis of the vehicle software configuration information including at least the ECUFW version of the ECU mounted on the electric vehicle 5. In an example, the second determination includes a determination of whether the security risk is a first type of security risk that the charging facility 3 can avoid by disconnecting the power supply apparatus 32 from the facility communication network 33.

Note that the first determination unit 411 and the second determination unit 412 may be integrally configured. Here, the first determination unit 411 is an example of a determination unit that performs the first determination. Similarly, the second determination unit 412 is an example of a determination unit that performs the second determination.

The charge control instruction unit 413 outputs, to the charging station management terminal 31, a charge control instruction according to determination results of the first determination unit 411 and the second determination unit 412 and verification results of the first verification unit 416 and the second verification unit 417. Here, the charge control instruction unit 413 is an example of a control unit.

In an example, when a determination result of the first determination indicates the presence of the security risk, the charge control instruction unit 413 determines a degradation mode to degrade a function of the power supply apparatus 32, on the basis of the determination result of the second determination. In addition, the charge control instruction unit 413 controls power supply to the electric vehicle 5 by the power supply apparatus 32 in the determined degradation mode.

In an example, when the security risk is the first type of security risk, such as "malware", the charge control instruction unit 413 controls power supply to the electric vehicle 5 in the degradation mode in which the power supply apparatus 21 is disconnected from the facility communication network 33.

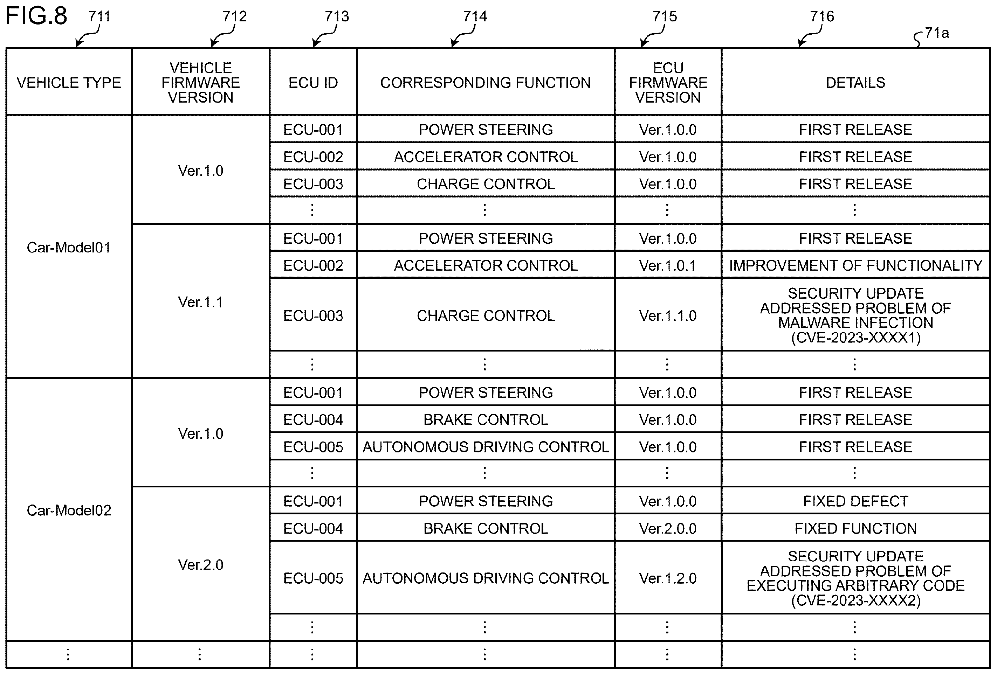

The storage control unit 414 controls the first storage unit 42 so that the first storage unit 42 stores various information. For example, the storage control unit 414 controls the first storage unit 42 to store the vehicle software configuration information (see FIG. 7) and vehicle management information (see FIG. 8) of the target electric vehicle 5 that are acquired from the vehicle management server 6.

The second communication control unit 415 controls the first communication unit 45 to communicate with the outside of the charging station management server 4.

The first verification unit 416 and the second verification unit 417 verify whether the power supply apparatus 32 can be safely reconnected to the facility communication network 33, after the power supply apparatus 32 is disconnected from the facility communication network 33, for avoidance of the security risk to the charging facility 3. For example, the first verification unit 416 performs a memory/file system inspection in the target power supply apparatus 32 connected to the verification network 34, and determines whether unauthorized modification of a program or the like is found in the target power supply apparatus 32. In an example, the first verification unit 416 performs the first verification to verify the presence or absence of unauthorized modification in the power supply apparatus 32 disconnected from the facility communication network 33. Here, the memory/file system inspection is an inspection of a malfunction of the memory of the power supply apparatus 32 and consistency and damage of various programs and data such as FW stored in the memory. For example, the second verification unit 417 performs the second verification to verify the presence or absence of unauthorized communication/operation in the target power supply apparatus 32 connected to the verification network 34. In an example, when the first verification shows the unauthorized modification, the second verification unit 417 rolls back the power supply apparatus 32, for further verification of whether there is an unauthorized operation. Note that the first verification unit 416 and the second verification unit 417 may be integrally configured.

The first storage unit 42 stores various data and programs used in the charging station management server 4. The first storage unit 42 can appropriately use various recording media and recording devices such as ROM, HDD, SSD, and a flash memory, as a hardware configuration. The first storage unit 42 may further be provided with RAM that temporarily stores active data.

The reservation management unit 43 manages a charge reservation made by a driver (the user of the electric vehicle 5). In an example, the reservation management unit 43 accepts the charge reservation from the electric vehicle 5, the mobile terminal used by the driver, or the like via the external network N. In addition, the reservation management unit 43 supplies reservation information about the accepted charge reservation to the charge control unit 41.

The display unit 44 presents information about a charging schedule, the security risk about the charging function of the electric vehicle 5, the security risk to the charging facility 3, or information necessary for monitoring power supply, to the user of the charging station management server 4. For the display unit 44, a liquid crystal display (LCD), an organic electoluminescence (EL) display, a projector, or the like can be used as appropriate. The display unit 44 may be configured as a touch screen display. In this configuration, the touch screen of the display unit 44 is provided, for example, on a surface of the display unit 44 and outputs information according to a touched position. The touch screen of the display unit 44 is an example of an input interface that acquires an operation input of the user of the charging station management server 4.

Note that the charging station management server 4 may be separately provided with a keyboard or the like, in addition to the touch screen, as the input interface that acquires the operation input of the user of the charging station management server 4.

The first communication unit 45 communicates with the outside of the charging station management server 4 via the external network N. The first communication unit 45 includes a communication circuit for wired or wireless communication as a hardware configuration. For the communication circuit for wireless communication, a communication circuit supporting various standards such as 4G, 5G, 6G, Wi-Fi (registered trademark), Bluetooth (registered trademark), and infrared communication can be used as appropriate.

The electric vehicle 5 is an example of a mobile object that is driven by using electric power from a mounted battery. The mobile object is not limited to an electric vehicle such as a passenger car, a truck, and a two-wheeled vehicle, and an electric bicycle, an electric scooter, and an electric wheelchair can be used as appropriate. In addition, the mobile object is not limited to a passenger vehicle, and may be a cargo vehicle such as a cargo carrier. The electric vehicle 5 is communicably connected to each of the charging station management server 4 and the vehicle management server 6, via the external network N. In addition, the electric vehicle 5 is chargeably and communicably connected to the charging facility 3 via the connection member 301.

FIG. 6 is a diagram illustrating an exemplary configuration of the electric vehicle 5 according to the first embodiment. The electric vehicle 5 is mounted with an in-vehicle network 51 including a controller area network (CAN), Ethernet (registered trademark), and the like. The electric vehicle 5 includes an external communication interface (I/F) 53, a power supply interface (I/F) 54, and a plurality of electronic control units (ECUs) 55. The external communication interface 53, the power supply interface 54, and the plurality of ECUs 55 are communicably connected to the in-vehicle network 51.

The external communication interface 53 is an interface for performing communication with the outside of the electric vehicle 5 via the external network N. The external communication interface 53 includes a communication circuit supporting various standards such as 4G, 5G, 6G, Wi-Fi (registered trademark), Bluetooth (registered trademark), and infrared communication.

The power supply interface 54 is an interface for connection to the power supply apparatus 32 via the connection member 301. In an example, the power supply interface 54 includes a mating member that is fitted to the connector of the connection member 301.

The plurality of ECUs 55 implements control of functions of the electric vehicle 5 such as power steering control, accelerator control, brake control, charge control, and autonomous driving control. The control of each of the functions of the electric vehicle 5 is implemented by at least one of the ECUs, and may be implemented, for example, by cooperation of the plurality of ECUs 55. Furthermore, control of a plurality of the functions of the electric vehicle 5 may be implemented by one ECU 55. FIG. 6 illustrates ECUs 55a, 55b, 55c..., and 55n as the plurality of ECUs 55. The number of ECUs 55 provided in the electric vehicle 5 can be appropriately designed. Here, each of the plurality of ECUs 55 is an example of at least one electronic control device.

The vehicle management server 6 is communicably connected to each of the charging station management server 4 and the electric vehicle 5, via the external network N. The vehicle management server 6 is configured to enable management of information about the electric vehicle 5. The vehicle management server 6 may be installed in the charging station similarly to the charging facility 3, may be installed together with the charging station management server 4, or may be installed in a place different from these. Furthermore, the vehicle management server 6 is operated by, for example, a company different from the charging facility 3 and the charging station management server 4, but may be operated by the same company as at least one of the charging facility 3 and the charging station management server 4. Furthermore, the charging station management server 4 and the vehicle management server 6 may be integrally configured.

FIG. 7 is a diagram illustrating an exemplary configuration of the vehicle management server 6 according to the first embodiment. The vehicle management server 6 includes an information search unit 61, a second communication unit 62, and a second storage unit 63.

The information search unit 61 includes a processor and a memory, and has a hardware configuration using a general computer. The processor executes a program loaded into the memory such as RAM to implement each function of the information search unit 61. For the processor, various processors such as CPU, GPU, ASIC, and FPGA can be used as appropriate. For the memory, various recording media and recording devices such as RAM, ROM, HDD, SSD, and a flash memory can be used as appropriate.

In an example, the information search unit 61 receives information searched for, such as the vehicle identification information, from the charging station management server 4 through the second communication unit 62.

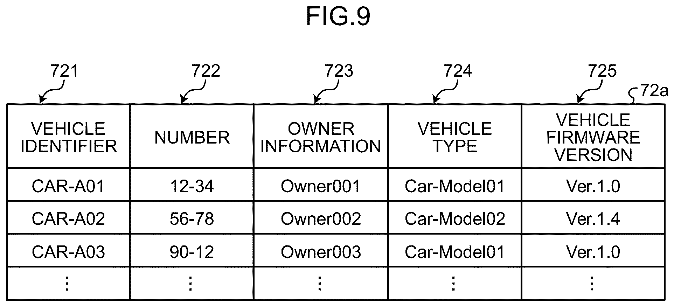

In an example, the information search unit 61 outputs search results such as vehicle software configuration information 71a (see FIG. 8) and vehicle management information 72a (see FIG. 9) about the electric vehicle 5 connected to the power supply apparatus 32, to the charging station management server 4, for example, through the second communication unit 62.

In an example, the information search unit 61 is configured to output the vehicle management information 72a about the electric vehicle 5 connected to the power supply apparatus 32 and the vehicle software configuration information 71a about the electric vehicle 5, in response to a request from the charging station management server 4. For example, the information search unit 61 outputs the vehicle management information 72a about the electric vehicle 5 corresponding to the vehicle identification information from the charging station management server 4, for example, a vehicle identifier 721, owner information 723, and the like. In addition, the information search unit 61 identifies a vehicle type 724 and a vehicle firmware (FW) version 725 of the electric vehicle 5 connected to the power supply apparatus 32, on the basis of the vehicle identification information and the vehicle management information 72a. In addition, the information search unit 61 outputs the vehicle software configuration information 71a corresponding to the identified vehicle type 724 and vehicle FW version 725, for example, ECUID 713, a corresponding function 714, an ECUFW version 715, details 716, and the like.

The second communication unit 62 communicates with the outside of the vehicle management server 6 via the external network N. The second communication unit 62 includes a communication circuit for wired or wireless communication as a hardware configuration. For the communication circuit for wireless communication, a communication circuit supporting various standards such as 4G, 5G, 6G, Wi-Fi (registered trademark), Bluetooth (registered trademark), and infrared communication can be used as appropriate.

The second storage unit 63 stores various data and programs used in the vehicle management server 6. For example, the second storage unit 63 stores the vehicle software configuration information 71a (see FIG. 8) for each vehicle type and the vehicle management information 72a (see FIG. 9) for each vehicle. The second storage unit 63 can appropriately use various recording media and recording devices such as ROM, HDD, SSD, and a flash memory, as a hardware configuration. The second storage unit 63 may further be provided with RAM that temporarily stores active data.

Note that the vehicle management information 72a may be stored in the first storage unit 42 of the charging station management server 4. In addition, the vehicle management information 72a may store information necessary for establishing communication between the power supply apparatus 32 and the electric vehicle 5.

Here, the vehicle software configuration information 71a and the vehicle management information 72a according to the present embodiment will be described with reference to the drawings.

FIG. 8 is a diagram illustrating an example of vehicle software configuration information 71a according to the first embodiment. The vehicle software configuration information 71a includes items of a vehicle type 711, a vehicle FW version 712, the ECUID 713, the corresponding function 714 of each of the ECUs, the ECUFW version 715, and the details 716. The vehicle software configuration information 71a is information indicating the latest vehicle FW of a certain vehicle type 711, and is information indicating a function and FW version of each ECU mounted on the electric vehicle 5, included in the FW. In addition, the vehicle software configuration information 71a may include updated contents such as release notes, and therefore, when the vehicle software configuration information 71a is acquired, the vehicle software configuration information 71a can also be used to determine the security risk. Here, the vehicle software configuration information 71a is an example of software information including at least firmware information of the electronic control device. Similarly, the ECUFW version 715 is an example of the firmware information of the electronic control device.

In the example of FIG. 8, as the vehicle software configuration information 71a, the vehicle FW versions 712 of "Ver.1.0" and "Ver.1.1" related to the vehicle type 711 of "Car-Model01", and the vehicle FW versions 712 of "Ver.1.0" and "Ver.2.0" related to the vehicle type 711 of "Car-Model02" are stored. For example, "Ver.1.1" of "Car-Model01 " and "Ver.2.0" of "Car-Model02" are each the vehicle FW version 712 indicating the latest FW of each vehicle type. In the example of FIG. 8, for "Ver.1.1"that is the latest FW of "Car-Model01", the ECUIDs 713 each of which is information uniquely identifying a related ECU are "ECU-001", "ECU-002", "ECU-003",.... Furthermore, the corresponding functions 714 of these ECUs are "power steering", "accelerator control", and "charge control" ..., respectively. Furthermore, ECUFW versions 715 of these ECUs are "Ver.1.0.0", "Ver.1.0.1", "Ver.1.1.0" ..., respectively. In addition, as items of the details 716 of these ECUs, updated contents such as release notes of "First release", "Improvement of functionality", and "Security update: Addressed a problem of malware infection (CVW-2023-XXXX1)"... are stored.

FIG. 9 is a diagram illustrating an example of the vehicle management information 72a according to the first embodiment. The vehicle management information 72a includes items of the vehicle identifier 721, a number 722, the owner information 723, the vehicle type 724, and the vehicle FW version 725. The vehicle management information 72a is information indicating an owner of a certain vehicle and a current vehicle FW version. The vehicle management information 72a is collected, for example, when the user registers for the charging service by the charging facility 3 or updated when FW of the electric vehicle 5 is updated. In addition, the vehicle management information 72a may include other information such as a vehicle shape, size, and body color of the electric vehicle 5.

In the example of FIG. 9, as the vehicle management information 72a, information about each electric vehicle 5 uniquely identified by each of the vehicle identifiers 721 of "CAR-A01", "CAR-A02", "CAR-A03", ... is stored. For example, for the electric vehicle 5 indicated by the vehicle identifier 721 of "CAR-A01", as the number 722 which is a license plate number of the vehicle, the owner information 723 which indicates the owner, the vehicle type 724, and the vehicle FW version 725 which indicates the vehicle FW currently applied to the electric vehicle 5, "12-34", "Owner001", "Car-Model01", and "Ver.1.0" are registered, respectively. Here, the number 722 of the vehicle management information 72a is an example of the vehicle identification information transmitted from the charging station management server 4 to the vehicle management server 6. Note that as long as identification can be made in the vehicle management server 6, other vehicle management information 72a other than the number 722 may be used as the vehicle identification information

For example, focusing on the electric vehicle 5 indicated by the vehicle identifier 721 of "CAR-A01", the latest vehicle FW version is "Ver.1.1" according to the vehicle software configuration information 71a but the version currently applied is "Ver.1.0" according to the vehicle management information 72a, and it can be understood that it is not the latest version. Furthermore, when the vehicle FW of the "Ver.1.0" is applied, the security update is not applied to the corresponding function 714 of "charge control" yet, according to the vehicle software configuration information 71a, and it can be found that there is a security risk.

Hereinafter, an exemplary operation of the charging system 1a according to the embodiment will be described with reference to the drawings. Note that a process described below is an example, and it is also possible to change the order of the process, delete some process steps, and add another process step.

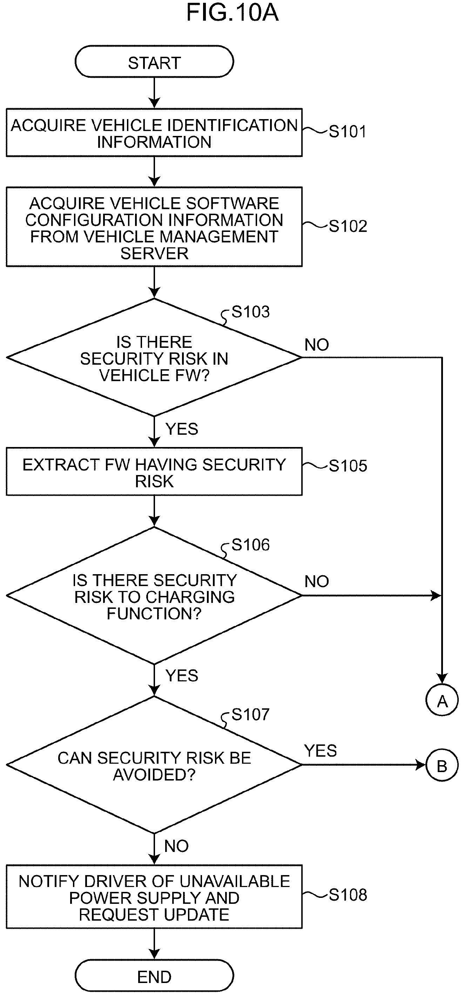

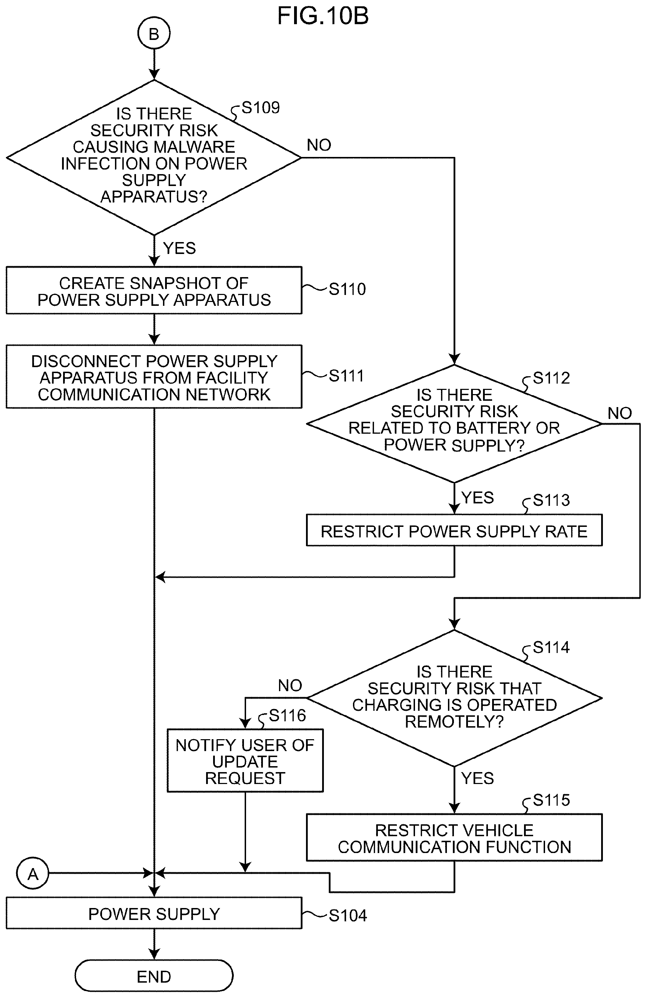

FIGS. 10A and 10B are flowcharts illustrating an example of a power supply process triggered by vehicle detection, performed in the charge control unit 41 according to the first embodiment.

The charge control unit 41 acquires the vehicle identification information such as the license plate number of the electric vehicle 5 (S101). In an example, when the camera is provided in the charging station, the charge control unit 41 acquires the license plate number obtained on the basis of the captured image of the license plate number, as the vehicle identification information. In an example, the charge control unit 41 acquires, as the vehicle identification information, the authentication information upon check-in by the user of the electric vehicle 5 at the charging station.

The charge control unit 41 outputs the acquired vehicle identification information to the vehicle management server 6, and acquires the vehicle software configuration information 71a and the vehicle management information 72a according to the acquired vehicle identification information, from the vehicle management server 6 (S102). In an example, the charge control unit 41 acquires the vehicle management information 72a including at least the vehicle type 724 and the vehicle FW version 725 about the electric vehicle 5 to be charged that is identified by the vehicle management server 6 on the basis of the vehicle identification information and the vehicle management information 72a. Furthermore, the charge control unit 41 further acquires related information for each of the latest vehicle FW version 712 of the vehicle type 711 to which the electric vehicle 5 to be charged corresponds and the current vehicle FW version 725, on the basis of the vehicle software configuration information 71a.

The charge control unit 41 determines the presence or absence of the security risk in the vehicle FW of the electric vehicle 5 (S103). In an example, for the electric vehicle 5 to be charged, the charge control unit 41 determines the presence or absence of the security risk in the vehicle FW of the electric vehicle 5, on the basis of a difference between the latest vehicle FW version 712 of the vehicle type 711 of the electric vehicle 5 and the vehicle FW version 725 currently applied to the electric vehicle 5. For example, when the latest vehicle FW version 712 of the vehicle type 711 and the vehicle FW version 725 currently applied are different, the charge control unit 41 determines the presence of the security risk in the vehicle FW of the electric vehicle 5.

When the absence of the security risk in the vehicle FW of the electric vehicle 5 is determined (S103: No), the charge control unit 41 outputs a power supply notification indicating permission of power supply, and power supply by the power supply apparatus 32 is performed (S104). Thereafter, the process of FIGS. 10A and 10B is finished.

Meanwhile, when the presence of the security risk in the vehicle FW of the electric vehicle 5 (S103: Yes) is determined, the charge control unit 41 extracts the FW of the electric vehicle 5 having the security risk (S105). In an example, the charge control unit 41 extracts the FW having the security risk on the basis of a difference in ECUFW version 715. For example, the charge control unit 41 extracts ECUFW of an ECU 55 having a different ECUFW version 715 between the latest vehicle FW version 712 of the vehicle type 711 and the vehicle FW version 725 currently applied to the electric vehicle 5.

The charge control unit 41 determines the presence or absence of the security risk to the charging function (S106). In an example, when the corresponding function 714 of the extracted ECUFW is the charging function such as "charge control", the charge control unit 41 determines the presence of the security risk to the charging function.

When the absence of the security risk to the charging function (S106: No) is determined, the process of FIGS. 10A and 10B proceeds to the processing of S104.

Meanwhile, when the presence of the security risk to the charging function is determined (S106: Yes), the charge control unit 41 determines whether the security risk can be avoided (S107). In an example, the charge control unit 41 refers to items of the details 716 between ECUFWs having different ECUFW versions 715. The charge control unit 41 refers to information about common vulnerabilities and exposures (CVE) between the ECUFWs and corresponding contents to determine whether the spread of damage can be suppressed, that is, whether the charging facility 3 can avoid the security risk. For example, when the security risk addressed or reported between different ECUFW versions 715 is a security risk such as "malware infection" or "execution of any code is enabled", the charge control unit 41 determines that the security risk can be avoided in the charging facility 3. For example, when the addressed or reported security risk is a security risk of attack such as communication interference caused between the electric vehicle 5 and the power supply apparatus 32, or when the security risk is unknown from description of the items of the details 716, the charge control unit 41 determines that the security risk cannot be avoided in the charging facility 3.

When it is determined that the charging facility 3 cannot avoid the security risk (S107: No), the charge control unit 41 notifies the driver that power supply is unavailable and requests the driver to update the vehicle FW (S108). In an example, the charge control unit 41 transmits a notification of unavailable power supply and a vehicle FW update request to the power supply apparatus 32, the electric vehicle 5, and the mobile terminal (not illustrated) used by the driver, via the external network N to present the notification of unavailable power supply and the vehicle FW update request, for notification to the driver. The notification to the driver may be performed by causing a display to display a notification screen, or may be performed by causing a speaker to output notification sound or notification voice. Therefore, at least one of the display and the speaker may be provided at the power supply apparatus 32. Thereafter, the process of FIGS. 10A and 10B is finished. Here, unavailable power supply of the power supply apparatus 32 according to the security risk is an example of the degradation mode to degrade the function of the power supply apparatus 32.

Meanwhile, when it is determined that the charging facility 3 can avoid the security risk (S107: Yes), the charge control unit 41 determines the presence or absence of the security risk causing malware infection on the power supply apparatus 32 (S109). In an example, the charge control unit 41 refers to the items of the details 716 between ECUFWs having different ECUFW versions 715, and determines the presence of the security risk causing the malware infection on the power supply apparatus 32 when the addressed or reported security risk is the "malware infection". Here, the addressed or reported security risk of the "malware infection" is an example of the first type of security risk that the charging facility 3 can avoid by disconnecting the power supply apparatus 32 from the facility communication network 33.

When the presence of the security risk causing the malware infection on the power supply apparatus 32 is determined (S109: Yes), the charge control unit 41 creates a snapshot of the power supply apparatus 32 (S110). Here, the snapshot of the power supply apparatus 32 is information that indicates a data state of the memory file system of the power supply apparatus 32 at that time, for example, a state of version of each FW or a control program. Thereafter, the charge control unit 41 holds the created snapshot in the first storage unit 42. Furthermore, the charge control unit 41 disconnects the power supply apparatus 32 from the facility communication network 33 (S111). In an example, the charge control unit 41 outputs a power supply apparatus disconnection instruction for permission of power supply under disconnection from the facility communication network 33, to the charging station management terminal 31 via the external network N, thereby performing power supply by the power supply apparatus 32 in a state where the power supply apparatus 32 is disconnected from the facility communication network 33 (S104). Thereafter, the process of FIGS. 10A and 10B is finished. Here, permitting power supply after disconnecting the power supply apparatus 32 from the facility communication network 33 according to the security risk is an example of the degradation mode to degrade the function of the power supply apparatus 32.

Meanwhile, when the absence of the security risk causing the malware infection on the power supply apparatus 32 is determined (S109: No), the charge control unit 41 determines the presence or absence of a security risk of the charging facility 3 related to the battery or power supply (S112).

When the presence of the security risk related to the battery or power supply is determined (S112: Yes), the charge control unit 41 restricts the power supply rate (S113). Thereafter, the charge control unit 41 outputs the power supply notification indicating permission of power supply under restriction of the power supply rate, to the charging station management terminal 31, thereby performing power supply by the power supply apparatus 32 while restricting the power supply rate (S104). Thereafter, the process of FIGS. 10A and 10B is finished. Here, permitting power supply after restricting the power supply rate of the power supply apparatus 32 according to the security risk is an example of the degradation mode to degrade the function of the power supply apparatus 32.

Meanwhile, when the absence of the security risk related to the battery or power supply is determined (S112: No), the charge control unit 41 determines the presence or absence of the security risk to the charging facility 3 that charging is operation remotely (S114).

When the presence of the security risk that charging is operated remotely is determined (S114: Yes), the charge control unit 41 restricts the vehicle communication function (S115). Thereafter, the charge control unit 41 outputs the power supply notification indicating permission of power supply under restriction of the vehicle communication function, to the charging station management terminal 31, thereby performing power supply by the power supply apparatus 32 while restricting the vehicle communication function (S104). Thereafter, the process of FIGS. 10A and 10B is finished. Here, permitting power supply after restricting the vehicle communication function of the power supply apparatus 32 according to the security risk is an example of the degradation mode to degrade the function of the power supply apparatus 32.

Meanwhile, when the absence of the security risk that charging is operated remotely is determined (S114: No), the charge control unit 41 requests the driver to update the vehicle FW, for example, as in the processing of S108 (S116). Thereafter, the process of FIGS. 10A and 10B proceeds to the processing of S104.

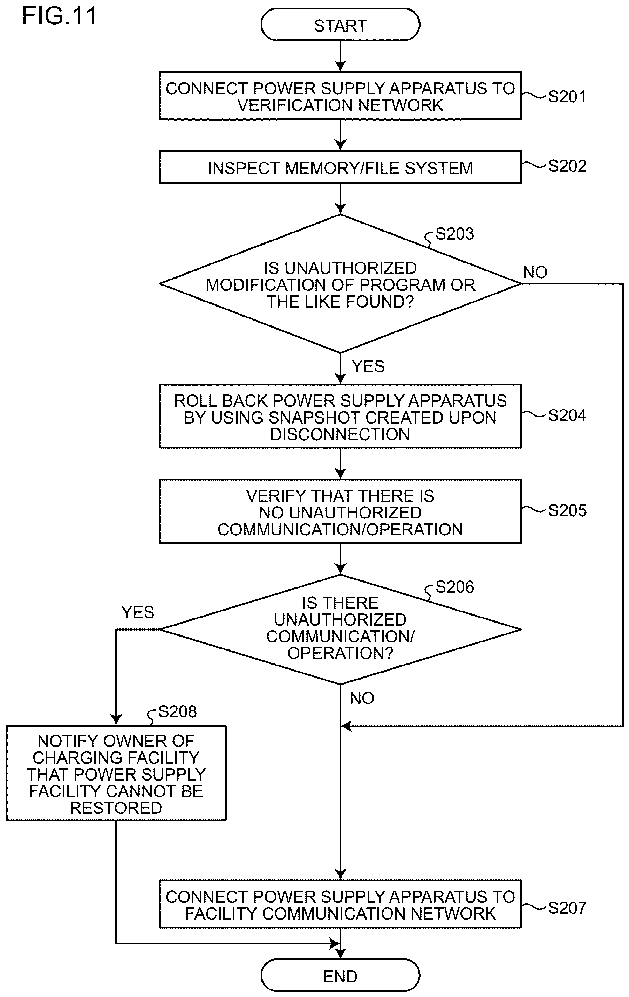

FIG. 11 is a flowchart illustrating an example of a verification process for reconnecting the power supply apparatus 32 to the facility communication network 33, performed in the charge control unit 41 according to the first embodiment. The flow of FIG. 11 is started, for example, with completion of power supply by the power supply apparatus 32 disconnected from the facility communication network 33 in the power supply process of FIGS. 10A and 10B as a trigger. Note that the process of FIG. 11 may be started with a state where the power supply apparatus 32 is not connected to the electric vehicle 5 as a trigger. Alternatively, the process of FIG. 11 may be started at appropriate timing after completion of power supply by the power supply apparatus 32 or after the state where the power supply apparatus 32 is not connected to the electric vehicle 5 is reached.

The charge control unit 41 connects the power supply apparatus 32 disconnected from the facility communication network 33, to the verification network 34 (S201). In an example, the charge control unit 41 outputs a verification network connection instruction to the charging station management terminal 31 via the external network N to connect the power supply apparatus 32 to the verification network 34.

The charge control unit 41 performs the memory/file system inspection in the target power supply apparatus 32 connected to the verification network 34 (S202). In an example, the charge control unit 41 inspects the malfunction of the memory of the power supply apparatus 32 and the consistency and damage of a file system in the memory.

The charge control unit 41 determines whether unauthorized modification of the file system of a program or the like is found (S203). When it is determined that the unauthorized modification of the file system of a program or the like is not found (S203: No), the process of FIG. 11 proceeds to the processing of S207.

Meanwhile, when it is determined that unauthorized modification of the file system of a program or the like is found (S203: Yes), the charge control unit 41 uses the snapshot created upon disconnection to roll back the file system of the power supply apparatus 32 (S204).

Thereafter, the charge control unit 41 verifies the presence or absence of unauthorized
communication/operation in the target power supply apparatus 32 (S205). In an example, the charge control unit 41 causes the power supply apparatus 32 to execute test processing, and determines whether the communication/operation is a defined
communication/operation. It is assumed that a verification program for executing the test processing and verification data defining normal communication/operation are, for example, predetermined and stored in the first storage unit 42 or the like. For example, the charge control unit 41 supplies the verification program to the power supply apparatus 32, for execution. For example, the charge control unit 41 acquires a result of the execution of the verification program to detect unauthorized communication/operation with reference to the verification data.

The charge control unit 41 determines whether the target power supply apparatus 32 has the unauthorized communication/operation in (S206). When it is determined that the target power supply apparatus 32 has no unauthorized communication/operation (S206: No), the charge control unit 41 connects the power supply apparatus 32 to the facility communication network 33 (S207). In an example, the charge control unit 41 outputs a facility communication network connection instruction to the charging station management terminal 31 via the external network N, thereby disconnecting the power supply apparatus 32 from the verification network 34 and reconnecting the power supply apparatus 32 to the facility communication network 33. Meanwhile, when it is determined that the target power supply apparatus 32 has the unauthorized communication/operation (S206: Yes), the charge control unit 41 notifies the owner of the charging facility 3 that the power supply apparatus 32 cannot be restored (S208). After the processing of S207 or the processing of S208, the process of FIG. 11 is finished.

Here, an exemplary operation of the charging system 1a according to the embodiment will be described more specifically.

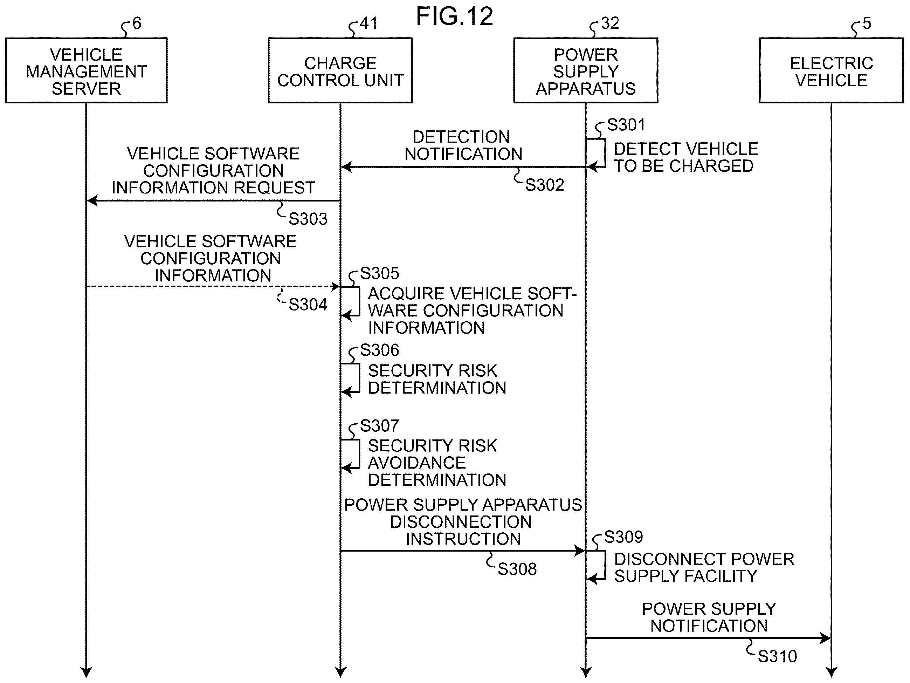

FIG. 12 is a sequence diagram illustrating an example of a power supply process triggered by vehicle detection, performed in the charging system 1a according to the first embodiment. FIG. 12 illustrates the power supply process in a case where the charging function of the electric vehicle 5 to be charged has the security risk and the charging facility 3 can avoid the security risk.

The power supply apparatus 32 of the charging facility 3 performs detection of the electric vehicle 5 to be charged (S301), and outputs the detection notification to the charging station management server 4 when the electric vehicle 5 to be charged is detected (S302). Here, it is assumed that the electric vehicle 5 to which the vehicle identifier 721 of "CAR-A01" is assigned is detected, and the detection notification including the number 722 of "12-34" as the vehicle identification information is output.

The charge control unit 41 of the charging station management server 4 outputs a vehicle software configuration information request requesting the vehicle software configuration information 71a and the vehicle management information 72a that correspond to the electric vehicle 5 with the number 722 of "12-34", to the vehicle management server 6 (S303).

The information search unit 61 of the vehicle management server 6 refers to the vehicle management information 72a, on the basis of the number 722 of "12-34" as the vehicle identification information. Therefore, the information search unit 61 identifies that the vehicle type 724 of the electric vehicle 5 to be charged is "Car-Model01", and the vehicle FW version 725 currently applied is "Ver.1.0".

In addition, the information search unit 61 further refers to the vehicle software configuration information 71a, and reads the vehicle software configuration information 71a about the vehicle type 711 of "Car-Model01", according to the identified vehicle type 724 of "Car-Model01". Then, the information search unit 61 outputs the identified vehicle management information 72a and the read vehicle software configuration information 71a, to the charging station management server 4 (S304).

The charge control unit 41 of the charging station management server 4 acquires the vehicle software configuration information 71a and the vehicle management information 72a from the vehicle management server 6 (S305).

In security risk determination (S306), the charge control unit 41 determines the presence of the security risk from a difference between "Ver.1.0", which is the vehicle FW version 725 currently applied to the electric vehicle 5 to which the vehicle identifier 721 of "CAR-A01" is assigned, and "Ver1.1", which is the latest vehicle FW version 712 of the vehicle type 711 of "Car-Model01" read from the vehicle software configuration information 71a. In addition, the charge control unit 41 extracts ECUFW having the corresponding functions 714 of "accelerator control" and "charge control" that have a difference in the ECUFW version 715, between the vehicle FW versions 725 of "Ver.1.0" and "Ver1.1" of the vehicle type 711 of "Car-Model01". Then, the ECUFW having the corresponding function 714 of "charge control" is extracted, and therefore, the charge control unit 41 determines the presence of the security risk to the charging function.

In addition, in security risk avoidance determination (S307), the charge control unit 41 refers to the descriptions of the details 716 between the vehicle FW version 725 of "Ver.1.0" and "Ver1.1" of the corresponding function 714 of "charge control". Then, since the security risk addressed between the ECUFW versions 715 of "Ver.1.0.0" and "Ver1.1.0" is the security risk of "malware infection", and therefore, the charge control unit 41 determines that the security risk is a security risk that the charging facility 3 can avoid and that the ECUFW version 715 of "Ver.1.0.0" currently applied has the security risk of "malware infection".

Therefore, the charge control unit 41 creates the snapshot of the power supply apparatus 32, and outputs the power supply apparatus disconnection instruction to instruct power supply under disconnection of the power supply apparatus 32 from the facility communication network 33, to the charging facility 3 (S308).

The power supply apparatus 32 of the charging facility 3 disconnects the target power supply apparatus 32 from the facility communication network 33, in response to the power supply apparatus disconnection instruction from the charging station management server 4 (S309). Furthermore, the power supply apparatus 32 outputs the power supply notification to the electric vehicle 5 to establish communication between the power supply apparatus 32 and the electric vehicle 5 and start power supply (S310).

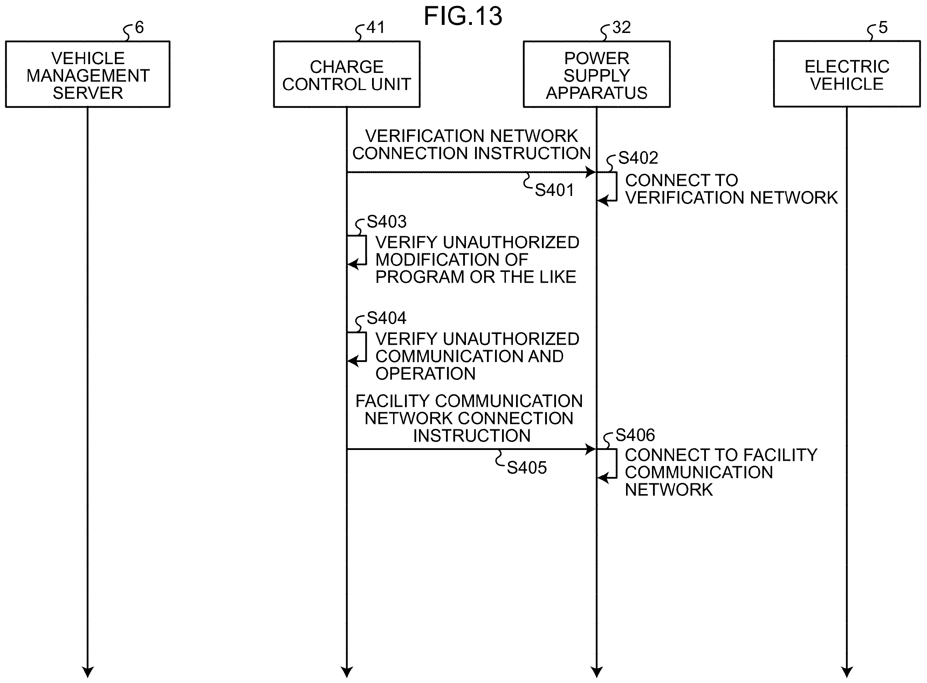

FIG. 13 is a sequence diagram illustrating an example of a verification process for reconnecting the power supply apparatus 32 to the facility communication network 33, performed in the charging system 1a according to the first embodiment. FIG. 13 illustrates the verification process in a case where the power supply apparatus 32 has the unauthorized modification and it is determined that there is no unauthorized communication/operation owing to the rollback using the snapshot.

The charge control unit 41 of the charging station management server 4 outputs, to the charging facility 3, the verification network connection instruction to instruct connection of the power supply apparatus 32 disconnected from the facility communication network 33 in the power supply process, to the verification network 34 (S401).

The power supply apparatus 32 of the charging facility 3 connects the target power supply apparatus 32 to the verification network 34, in response to the verification network connection instruction from the charging station management server 4 (S402).

The charge control unit 41 of the charging station management server 4 performs the memory/file system inspection in the power supply apparatus 32 connected to the verification network 34 to verify the unauthorized modification of the file system of a program or the like (S403). In response to the detection of the unauthorized modification in the power supply apparatus 32, the charge control unit 41 uses the snapshot created upon disconnection from the facility communication network 33 in the power supply process to roll back the file system of the power supply apparatus 32.

In addition, the charge control unit 41 causes the power supply apparatus 32 to execute the verification program, thereby performing the test processing for simulation of communication/operation, verifying the presence or absence of the unauthorized communication/operation (S404).

In addition, in response to the determination that there is no unauthorized communication/operation, the charge control unit 41 outputs the facility communication network connection instruction to instruct reconnection of the power supply apparatus 32 to the facility communication network 33, to the charging facility 3 (S405).

In response to the facility communication network connection instruction from the charging station management server 4, the power supply apparatus 32 of the charging facility 3 switches the connection destination of the target power supply apparatus 32, from the verification network 34 to the facility communication network 33 (S406).

In this way, in the charge control according to the present embodiment, the presence or absence of the security risk of the electric vehicle 5 to the charging function is determined on the basis of the vehicle software configuration information 71a, and it is determined whether the charging facility 3 can avoid the security risk by degrading the functions of the power supply apparatus 32. Then, in the charge control according to the present embodiment, when the electric vehicle 5 has the security risk to the charging function, the degradation mode to degrade the function of the power supply apparatus 32 is determined on the basis of a determination result of determination of whether the charging facility 3 can avoid the security risk by degrading the functions of the power supply apparatus 32.

This configuration makes it possible to degrade the functions of the power supply apparatus 32, according to the security risk of the electric vehicle 5 to the charging function. Therefore, the charge control according to the embodiment makes it possible to ensure the safety of the charging station with minimized loss of the original charging function of the charging station, enabling continuous power supply to the mobile object to be charged. In other words, it is possible to protect the charging facility 3 connected to the electric vehicle 5 upon power supply, from the security risk arising from the electric vehicle 5.

Hereinafter, another embodiment of the charging system 1 according to the present disclosure will be described with reference to the drawings. Note that, in the descriptions of the following embodiments, a difference will be mainly described, and the contents similar to the contents described above will not be described as appropriate.

### (Second Embodiment)

A charging system 1b according to the present embodiment is similar to the charging system 1a according to the first embodiment except that a communication form between the charging facility 3 and the charging station management server 4 is different. Here, the charging system 1b according to a second embodiment is an example of the charging system 1 according to an embodiment of the present disclosure. In the embodiments of the present disclosure, when the charging system 1a and the charging system 1a are not distinguished from each other, the charging systems may be collectively referred to as the charging system 1, in some cases.

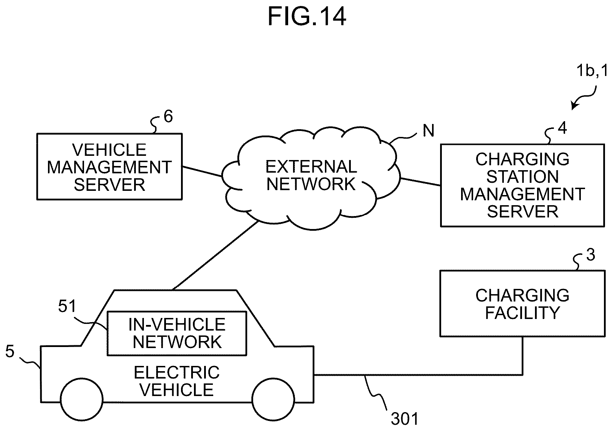

FIG. 14 is a diagram illustrating an exemplary configuration of the charging system 1b according to the second embodiment. In the charging system 1b according to the present embodiment, the charging facility 3 is connected to the charging station management server 4 without using the external network N, that is, directly connected to the charging station management server 4.

In this way, even in a configuration in which the charging facility 3 and the charging station management server 4 are connected without using the external network N, the same effects as those of the embodiment described above can be obtained. In addition, according to this configuration, it is possible to provide increased speed and stability in communication between the charging facility 3 and the charging station management server 4, and it is possible to restrict an entry route to the charging facility 3 through the external network N to improve the safety related to the charge control.

### (Third Embodiment)

The charging system 1 according to the present embodiment is similar to the charging system 1a according to the first embodiment except that the power supply process is started with the charge reservation as a trigger instead of vehicle detection.

When accepting the charge reservation, the reservation management unit 43 according to the present embodiment provides a predetermined waiting time according to a determination result of the security risk determination and/or the security risk avoidance determination. In an example, when there is a security risk and when the charging facility 3 can avoid the security risk, the reservation management unit 43 sets reservation time at which power supply is started with a predetermined waiting time. Here, the reservation management unit 43 according to the embodiment is an example of a control unit.

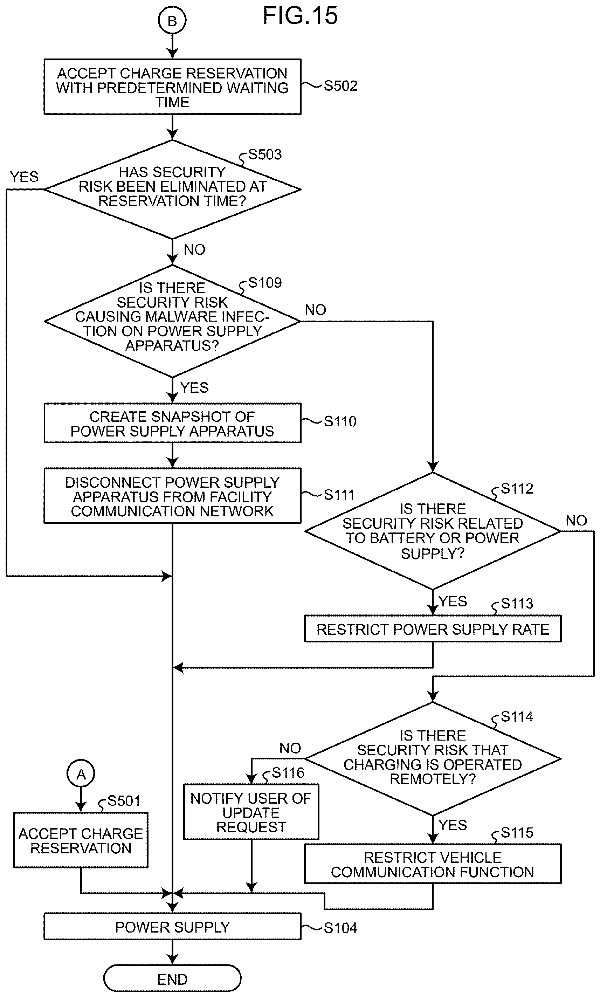

FIGS. 10A and 15 are flowcharts illustrating an example of a power supply process triggered by the charge reservation, performed in the charge control unit 41 and the reservation management unit 43 according to a third embodiment. Here, a difference from the power supply process (see FIGS. 10A and 10B) according to the first embodiment will be mainly described.

In the process of FIGS. 10A and 15, the charge control unit 41 acquires the vehicle identification information such as the owner information 723 and the vehicle type 724 (S101). In an example, the charge control unit 41 acquires the vehicle identification information, on the basis of the reservation information in charge reservation registration including at least the owner information 723 and the vehicle type 724. The reservation information can be acquired on the basis of, for example, information input by the user of the electric vehicle 5 in the charge reservation registration and the authentication information when the user logs in to a charge reservation registration service.

Furthermore, in the process of FIGS. 10A and 15, when the absence of the security risk in the vehicle FW of the electric vehicle 5 is determined (S103: No), the charge control unit 41 outputs the power supply notification indicating permission of power supply after the reservation management unit 43 accepts the charge reservation (S501), and power supply by the power supply apparatus 32 is performed (S104).

In addition, in the process of FIGS. 10A and 15, when the absence of the security risk to the charging function is determined (S106: No), the reservation management unit 43 accepts the charge reservation (S501), and then the process proceeds to S104.

In addition, in the process of FIGS. 10A and 15, when it is determined that the security risk can be avoided in the charging facility 3 (S107: Yes), the reservation management unit 43 accepts the charge reservation with the predetermined waiting time (S502). In an example, unlike the case of the absence of the security risk (S501), the reservation management unit 43 accepts the charge reservation with the reservation time after the predetermined waiting time such as 30 minutes. It is assumed that the predetermined waiting time is, for example, determined in advance and stored in the first storage unit 42 or the like. At this time, the charge control unit 41 may make the update request for requesting the driver to update the vehicle FW. Here, the reservation time according to the embodiment is an example of power supply time.

At the reservation time, the charge control unit 41 determines whether the security risk to the charging function has been eliminated (S503). In an example, the charge control unit 41 determines the presence or absence of the security risk to the charging function, for example, in a similar manner to the processing of S102 to S106, on the basis of the vehicle FW version 725 applied to the electric vehicle 5 to be charged at the reservation time. When it is determined that the security risk to the charging function has been eliminated (S503: Yes), the process of FIGS. 10A and 15 proceeds to processing of S104. Meanwhile, when it is not determined that the security risk to the charging function has been eliminated (S503: No), the process of FIGS. 10A and 15 proceeds to the processing of S109.

In this way, the charge control unit 41 according to the present embodiment performs the first determination again by the reservation time, and when the determination result of the first determination indicates the absence of the security risk by the reservation time, power supply to the electric vehicle 5 is controlled without degrading the function of the power supply apparatus 32. Furthermore, when the determination result of the first determination does not indicate the absence of the security risk by the reservation time, the charge control unit 41 controls the power supply to the electric vehicle 5 in the degradation mode in which the power supply apparatus 32 is disconnected from the facility communication network 33.

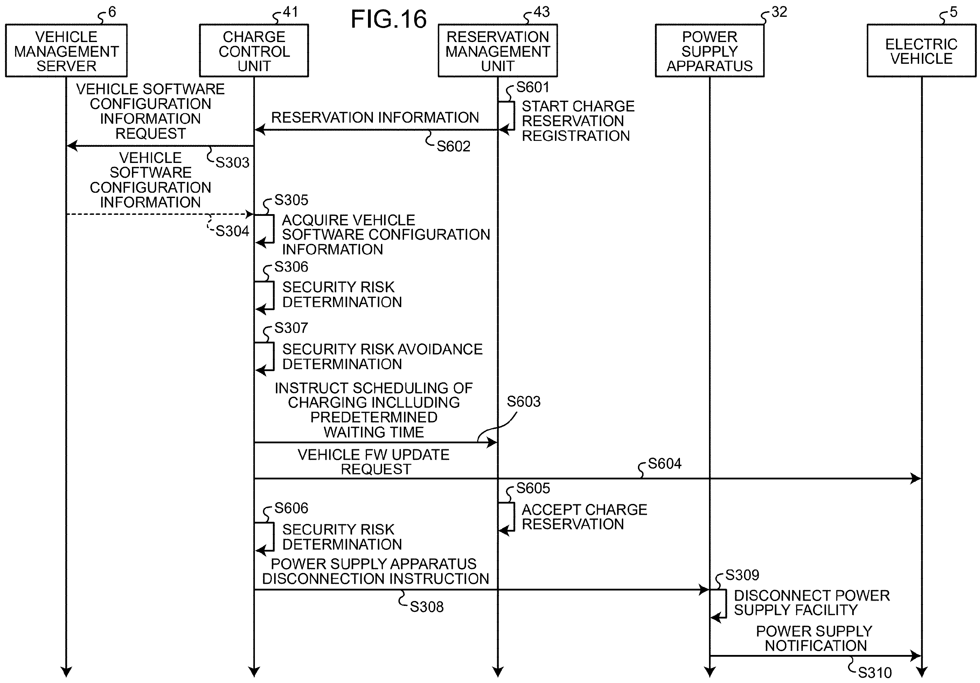

FIG. 16 is a sequence diagram illustrating an example of a power supply process triggered by the charge reservation, performed in the charging system 1 according to the third embodiment. FIG. 16 illustrates the power supply process in a case where the charging function of the electric vehicle 5 to be charged has the security risk, the security risk can be avoided in the charging facility 3, and the security risk to the charging function is not eliminated at the reservation time. Here, a difference from the power supply process (see FIG. 12) according to the first embodiment will be mainly described.

The reservation management unit 43 starts the charge reservation registration (S601). In addition, the reservation management unit 43 acquires the reservation information including at least the owner information 723 and the vehicle type 724, on the basis of the information input by the user of the electric vehicle 5 and the authentication information when the user logs in to the charge reservation registration service, and outputs the reservation information to the charge control unit 41 (S602). Here, it is assumed that the reservation information including the owner information 723 of "Owner001" and the vehicle type 724 of "Car-Model01" is output.

The charge control unit 41 of the charging station management server 4 outputs the vehicle software configuration information request requesting the vehicle software configuration information 71a and the vehicle management information 72a that correspond to the owner information 723 of "Owner001" and the vehicle type 724 of "Car-Model01", to the vehicle management server 6 (S303).

The information search unit 61 of the vehicle management server 6 refers to the vehicle management information 72a, on the basis of the owner information 723 of "Owner001" and the vehicle type 724 of "Car-Model01", as the vehicle identification information. Therefore, the information search unit 61 identifies that the vehicle FW version 725 currently applied to the electric vehicle 5 to be charged is "Ver.1.0".

After the security risk avoidance determination (S307), the charge control unit 41 instructs the reservation management unit 43 to schedule charging including the predetermined waiting time, in response to the determination of the presence of the security risk of "malware infection" to the charging function (S603). In addition, the charge control unit 41 may output the vehicle FW update request to the electric vehicle 5 (S604) and request the driver to update the vehicle FW during the predetermined waiting time provided before the reservation time.

In response to an instruction from the charge control unit 41, the reservation management unit 43 accepts the charge reservation with the reservation time after the predetermined waiting time (S605). In addition, at the reservation time, the charge control unit 41 determines whether the security risk to the charging function has been eliminated (S606), and gives instructions to create the snapshot of the power supply apparatus 32 and to disconnect the power supply apparatus 32 from the facility communication network 33 when it is determined that the security risk to the charging function has not been eliminated (S308).

In this way, the charging system 1 according to the present embodiment performs the power supply process triggered by the charge reservation, and sets the reservation time with the predetermined waiting time, when the presence of the security risk to the charging function is determined. This configuration provides an effect the it is possible to update the vehicle FW during the waiting time before the reservation time, in addition to the effects similar to those of the embodiments described above. Therefore, according to the charging system 1 of the present embodiment, it is possible to further improve the safety of the charge control.

Note that the waiting time provided for charge reservation may be a predetermined constant time, or may be changed according to the determination result of the security risk, such as increasing the waiting time when the power supply rate is restricted according to the security risk to the charging function. In addition, for update to the latest vehicle FW applicable to the electric vehicle 5 to be charged, the length of the waiting time may be changed according to the number of ECUFWs to be updated, data volume, and a prediction time required for the update. This configuration makes it possible to facilitate update of the vehicle FW during the waiting time before the reservation time, further improving the safety of the charge control.

Note that the technology according to the present embodiment can be appropriately applied to the charging system 1 according to the embodiments described above.

### (Fourth Embodiment)

The in-vehicle computer to which the latest update patch is not applied has a risk that the safeties of the vehicle and the driver are threatened, for example, the security risk against which measures are not taken is exploited for unauthorized operation of a function of the vehicle.

Therefore, in the present embodiment, a description will be made of the charging system 1 that is configured to protect the electric vehicle connected to the charging facility upon power supply, from the security risk arising from the electric vehicle.

The charging system 1 according to the present embodiment is similar to the charging system 1a according to the first embodiment except that charge control according to the security risk to a driving control function is performed instead of the security risk to the charging function in the electric vehicle 5 to be charged. In the present embodiment, a difference from the charging system 1a according to the first embodiment will be mainly described.

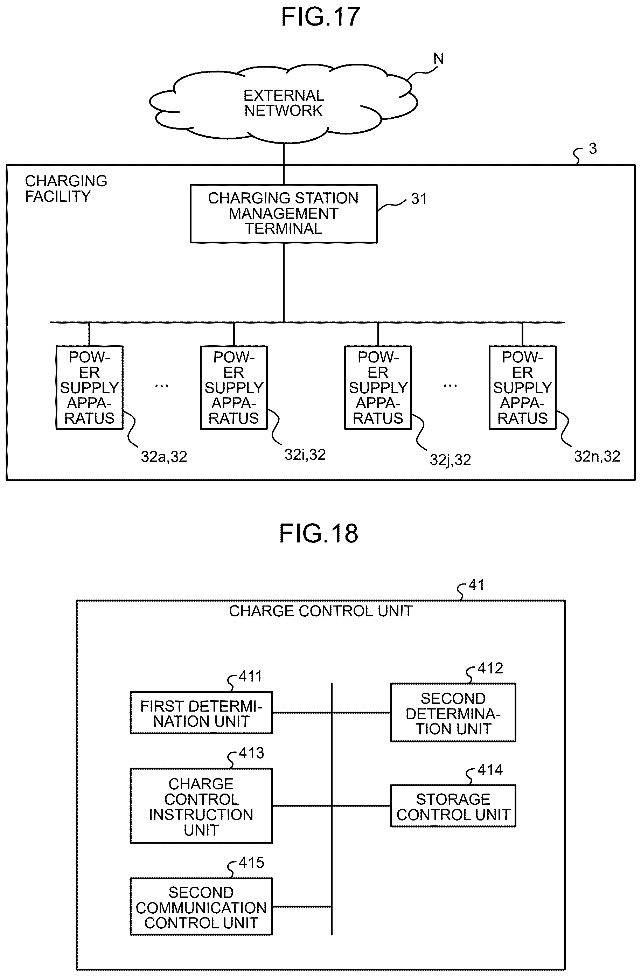

FIG. 17 is a diagram illustrating an exemplary configuration of the charging facility 3 according to a fourth embodiment. The charging facility 3 according to the present embodiment is similar to the charging facility 3 according to the first embodiment (see FIG. 2) except that the facility communication network 33 and the verification network 34 are not provided. Specifically, in the charging facility 3 according to the present embodiment, the charging station management terminal 31 is connected to each of the plurality of power supply apparatuses 32 via one network.

FIG. 18 is a diagram illustrating an exemplary configuration of the charge control unit 41 according to the fourth embodiment. Unlike the charge control unit 41 according to the first embodiment (see FIG. 5), the charge control unit 41 according to the present embodiment is not provided with the first verification unit 416 and the second verification unit 417. Here, the first determination unit 411 and the second determination unit 412 according to the present embodiment are also examples of the determination unit. Similarly, the charge control instruction unit 413 according to the present embodiment is also an example of the control unit.

In addition, the first determination unit 411 and the second determination unit 412 according to the present embodiment determine the security risk to the driving control function instead of the security risk to the charging function according to the first embodiment. In an example, the first determination unit 411 makes a first determination to determine the presence or absence of the security risk to the driving control function of the electric vehicle 5, arising from the FW of each ECU 55. In an example, when a determination result of the first determination indicates the presence of the security risk, the second determination unit 412 performs a second determination that indicates whether after at least one driving control function having the security risk is disabled, a second driving control function enables traveling and the electric vehicle 5 to be charged can avoid the security risk. In other words, the first determination according to the present embodiment is a determination of the presence or absence of the security risk to at least one driving control function of the electric vehicle 5, arising from the FW of at least one ECU 55. Furthermore, the second determination according to the present embodiment is a determination of whether the electric vehicle 5 to be charged can avoid the security risk by disabling a predetermined function from among at least one driving control function of the electric vehicle 5 when the predetermined function has the security risk.

The charge control instruction unit 413 adds the charge control instruction according to the determination results of the first determination unit 411 and the second determination unit 412, to the charging station management terminal 31, and outputs the charge control instruction to the electric vehicle 5 to be charged. In an example, when the second driving control function enables the traveling of the electric vehicle 5 and the electric vehicle 5 can avoid the security risk after the at least one driving control function having the security risk is disabled, the charge control instruction unit 413 disables the at least one driving control function having the security risk and then permits power supply to the electric vehicle 5. In an example, when the second driving control function enables the traveling and the electric vehicle 5 to be charged can avoid the security risk after the at least one driving control function having the security risk is disabled, the charge control instruction unit 413 outputs notification information for confirmation with the driver whether to disable the at least one driving control function having the security risk. In an example, when acquiring notification information indicating driver's agreement to disable the at least one driving control function having the security risk, the charge control instruction unit 413 outputs instruction information for disabling the at least one driving control function having the security risk, to the electric vehicle 5.

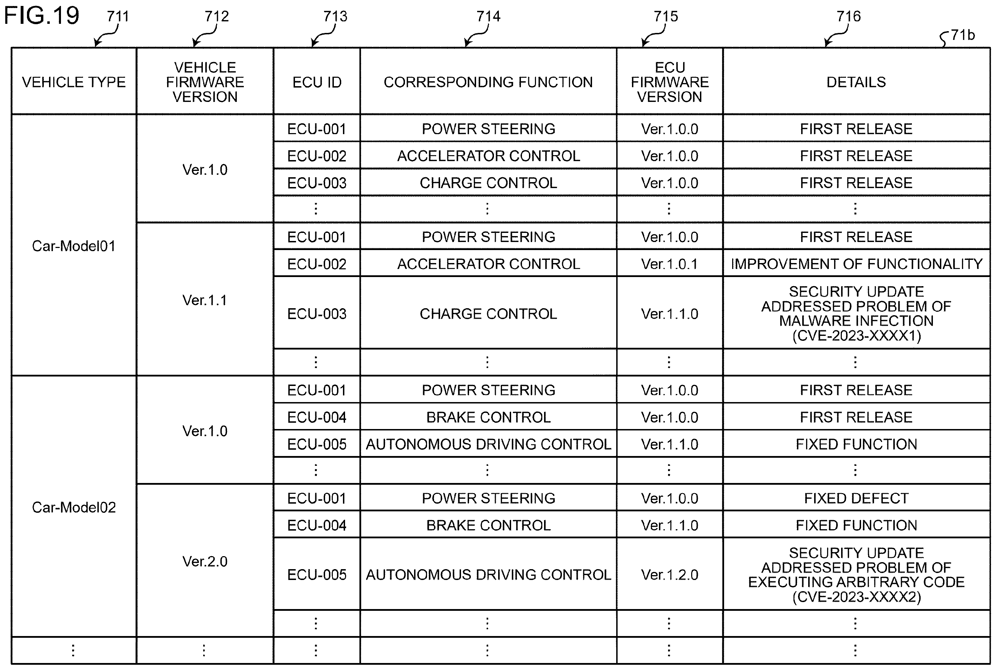

FIG. 19 is a diagram illustrating an example of a vehicle software configuration information 71b according to the fourth embodiment. The vehicle software configuration information 71b illustrated in FIG. 19 is similar to the vehicle software configuration information 71a illustrated in FIG. 8, except that the ECUFW version 715 of the vehicle type 711 of "Car-Model02" is different.

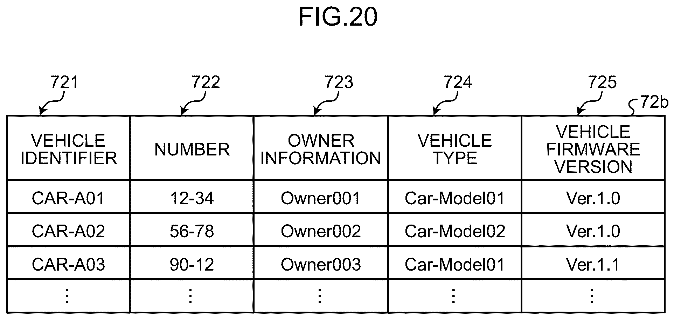

FIG. 20 is a diagram illustrating an example of a vehicle management information 72b according to the fourth embodiment. The vehicle management information 72b illustrated in FIG. 20 is similar to the vehicle management information 72a illustrated in FIG. 9 except that the vehicle FW versions 725 of the electric vehicles 5 indicated by the vehicle identifiers 721 of "CAR-A02" and "CAR-A03" are different.

Here, an overview of the charge control according to the security risk to the driving control function, performed by the charging system 1 according to the present embodiment will be described with reference to the drawings.

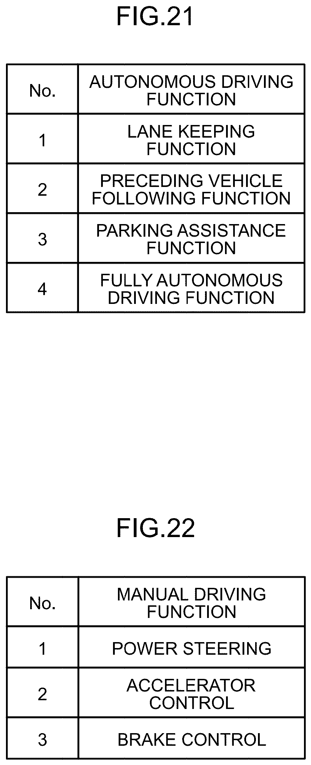

FIG. 21 is a diagram illustrating an example of corresponding functions 714 of the ECU 55 related to autonomous driving control according to the fourth embodiment. When the electric vehicle 5 to be charged has a security risk to a driving control function related to an autonomous driving function, such as a lane keeping function (No. 1), a preceding vehicle following function (No. 2), a parking assistance function (No. 3), and a full autonomous driving function (No. 4), that is, an autonomous driving function, from among the corresponding functions 714 of the ECU 55, the charge control unit 41 according to the present embodiment performs charge control to restrict the autonomous driving according to the security risk. In an example, when there is a security risk to at least one of the autonomous driving functions No. 1 to No. 3, the charge control unit 41 restricts at least one autonomous driving function and the full autonomous driving function of No. 4 having a higher level. In an example, when there is a security risk to the autonomous driving function No. 4, the charge control unit 41 restricts only the full autonomous driving function (No. 4). For example, these restrictions are placed on the basis of the fact that the autonomous driving functions No. 1 to No. 3 are independent functions, while the full autonomous driving function (No. 4) is a function including the autonomous driving functions No. 1 to No. 3. Note that the level assigned to each of the autonomous driving functions may be changed as appropriate.

FIG. 22 is a diagram illustrating an example of the corresponding functions 714 of the ECU 55 related to manual driving control according to the fourth embodiment. When the electric vehicle 5 to be charged has a security risk to a driving control function related to manual driving, such as the power steering (No. 1), the accelerator control (No. 2), and the brake control (No. 3), that is, a manual driving function, from among the corresponding functions 714 of the ECU 55, the charge control unit 41 according to the present embodiment performs charge control to restrict the manual driving according to the security risk. In an example, when there is a security risk to any of the manual driving functions No. 1 to No. 3, the charge control unit 41 restricts the manual driving. For example, these restrictions are placed on the basis of the fact that any of the manual driving functions No. 1 to No. 3 is a driving control function required for the manual driving.

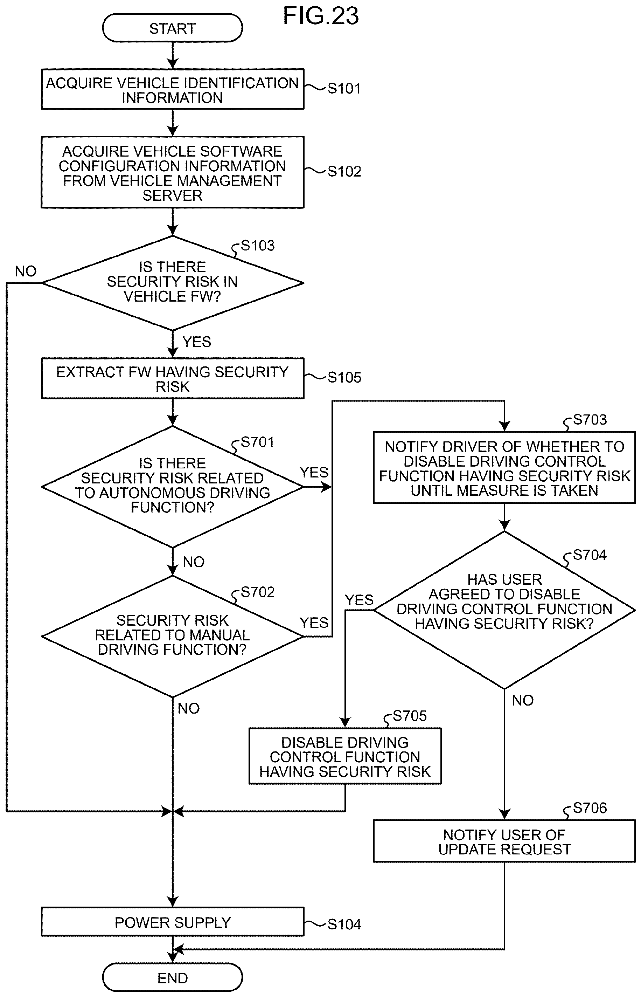

FIG. 23 is a flowchart illustrating an example of a power supply process triggered by vehicle detection, performed in the charge control unit 41 according to the fourth embodiment. Here, a difference from the power supply process (see FIGS. 10A and 10B) according to the first embodiment will be mainly described.

In the process of FIG. 23, after the FW having the security risk is extracted (S105), the charge control unit 41 determines whether the corresponding function 714 of the extracted FW is the security risk related to the autonomous driving function (S701). In an example, when the corresponding function 714 of the extracted ECUFW is the driving control function such as "autonomous driving control", the charge control unit 41 determines the presence of the security risk related to the autonomous driving function.

When it is determined that it is not the security risk related to the autonomous driving function (S701: No), the charge control unit 41 determines whether the corresponding function 714 of the extracted FW is a security risk related to the manual driving function (S702). In an example, when the corresponding function 714 of the extracted ECUFW is the driving control function such as "power steering", "accelerator control", or "brake control", the charge control unit 41 determines the presence of the security risk related to the manual driving function.

When it is determined that it is not the security risk related to the manual driving function (S702: No), the process of FIG. 23 proceeds to processing of S104.

Meanwhile, when it is determined that it is the security risk related to the autonomous driving function or the manual driving function (S701: Yes and S702: Yes), the charge control unit 41 notifies the driver of confirmation of whether to agree to disable (restrict) at least one driving control function having the security risk until a measure such as updating of the vehicle FW is taken (S703). Here, it is assumed that at least one driving control function having the security risk means the autonomous driving function or the manual driving function determined to have the security risk.

The charge control unit 41 determines whether the user of the electric vehicle 5 has agreed to disable the autonomous driving function or the manual driving function (S704). When it is determined that the user has agreed to disable the autonomous driving function or the manual driving function (S704: Yes), the charge control unit 41 disables the autonomous driving function or the manual driving function that the user has agreed to (S705). Thereafter, the process of FIG. 23 proceeds to the processing of S104.

Meanwhile, when it is determined that the user of the electric vehicle 5 does not agree to disable the autonomous driving function or the manual driving function (S704: No), the charge control unit 41 requests the user to update the vehicle FW (S706). Thereafter, the process of FIG. 23 is finished.

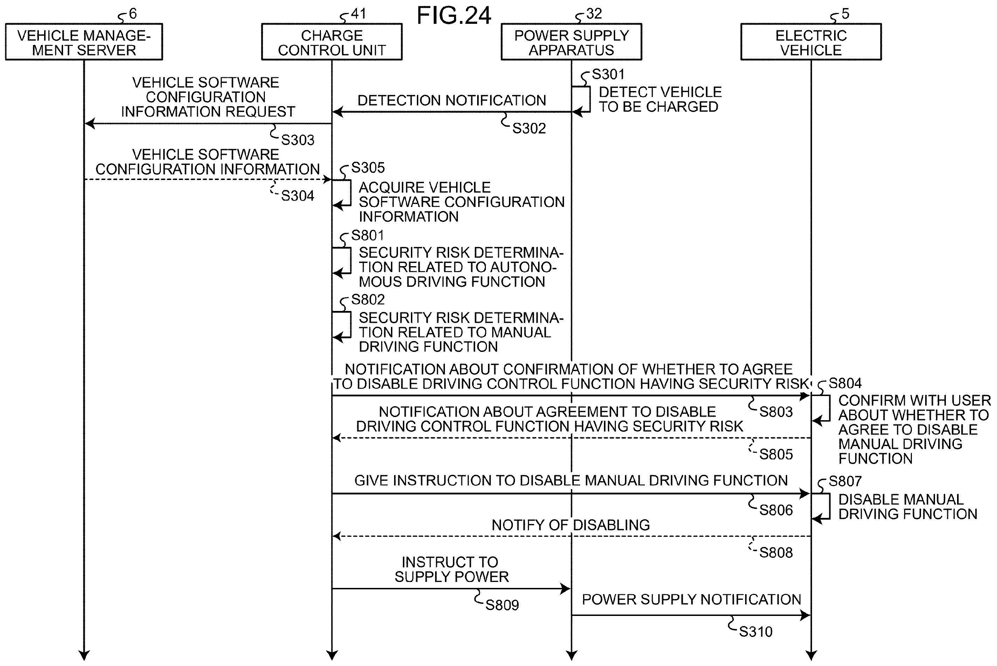

FIG. 24 is a sequence diagram illustrating an example of a power supply process triggered by vehicle detection, performed in the charging system 1 according to the fourth embodiment. FIG. 24 illustrates the power supply process in a case where the electric vehicle 5 to be charged has the manual driving function and the autonomous driving function, each of which has the security risk, and the driver's agreement to disable the manual driving function is obtained. Here, a difference from the power supply process (see FIG. 12) according to the first embodiment will be mainly described.

After acquiring the vehicle software configuration information 71b and the vehicle management information 72b from the vehicle management server 6 (S305), the charge control unit 41 of the charging station management server 4 performs security risk determination related to the autonomous driving function (S801) and security risk determination related to the autonomous driving function (S802). Here, it is assumed that the vehicle type 724 of the electric vehicle 5 to be charged is "Car-Model02" and the vehicle FW version 725 currently applied is "Ver.1.0".

In the security risk determination related to the autonomous driving function (S801) and the security risk determination related to the manual driving function (S802), the charge control unit 41 determines the presence of the security risk from a difference between "Ver.1.0", which is the vehicle FW version 725 currently applied to the electric vehicle 5 to be charged, and "Ver2.0", which is the latest vehicle FW version 712 of the vehicle type 711 of "Car-Model02" read from the vehicle software configuration information 71b. In addition, the charge control unit 41 extracts ECUFW of the corresponding functions 714 of "autonomous driving control" and "brake control" that have a difference in the ECUFW version 715, between the vehicle FW versions 725 of "Ver.1.0" and "Ver2.0" of the vehicle type 711 of "Car-Model02". Then, the ECUFW having the corresponding functions 714 of "autonomous driving control" and "brake control" is extracted, and therefore, the charge control unit 41 determines the presence of the security risks to the autonomous driving function and the manual driving function.

The charge control unit 41 of the charging station management server 4 outputs the notification about confirmation of whether to agree to disable the driving control function having the security risk, to the electric vehicle 5 (S803). Here, the notification about confirmation of whether to agree according to the present embodiment is an example of notification information. Furthermore, the ECU 55 that controls an in-vehicle display or an in-vehicle speaker of the electric vehicle 5 confirms with the user of the electric vehicle 5 whether to agree to disable the driving control function having the security risk (S804). In an example, the ECU 55 displays a confirmation screen for confirming agreement with the user or outputs confirmation voice. Furthermore, when the driver agrees to disable the manual driving function, the ECU 55 outputs, to the charging station management server 4, the notification about agreement to disable the driving control function having a security risk that indicates agreement to disable the manual driving function (S805). The notification about agreement to disable the driving control function having the security risk is also an example of the notification information. Note that these confirmations of agreement are not limited to outputting to the electric vehicle 5, and may be performed using the mobile terminal, such as a smartphone, used by the driver, or using a display or a speaker mounted on the power supply apparatus 32.

When the driver agrees to disable the manual driving function, the charge control unit 41 of the charging station management server 4 outputs an instruction to disable the manual driving function, to the electric vehicle 5 (S806). Here, the instruction to disable the manual driving function according to the present embodiment is an example of the instruction information for disabling the at least one driving control function having the security risk. Furthermore, the ECU 55 to which the ECUID 713 of "ECU-004" implementing the corresponding function 714 of "brake control" of the electric vehicle 5 is allocated, or the ECU 55 controlling the entire manual driving function disables the manual driving function (S807) and outputs a notification about the disabling of the manual driving function, to the charging station management server 4 (S808).

Thereafter, the charge control unit 41 of the charging station management server 4 outputs a power supply instruction to the charging facility 3, in response to the notification about the disabling of the manual driving function from the electric vehicle 5 (S809). In addition, the power supply apparatus 32 of the charging facility 3 outputs the power supply notification to the electric vehicle 5, in response to the power supply instruction from the charging station management server 4, establishes communication between the power supply apparatus 32 and the electric vehicle 5, and starts power supply (S310).

Note that when the second driving control function enables the traveling of the electric vehicle 5 and the electric vehicle 5 can avoid the security risk after the at least one driving control function having the security risk is disabled, the charge control unit 41 may output, to the vehicle management server 6, the instruction information for disabling the at least one driving control function having the security risk (S806). In this configuration, the charge control unit 41 may permit power supply to the electric vehicle 5 when acquiring a notification (S808) indicating that at least one driving control function having a security risk has been disabled, from the electric vehicle 5.

Note that, in the charging system 1 according to the present embodiment, the charge control unit 41 may be configured to cancel the disabling, that is, to enable the at least one driving control function having the security risk, when the update is confirmed with reference to the vehicle management information 72b of the vehicle management server 6, under a condition that the latest FW is applied upon instruction to disable the at least one driving control function having the security risk. Alternatively, the electric vehicle 5 may be configured to hold information indicating the latest FW upon disabling the at least one driving control function having the security risk so that when the FW applied in updating the FW matches the latest FW indicated by the held information, the electric vehicle 5 outputs a notification about the matching, to the charging station management server 4 or the vehicle management server 6. In this case, the charge control unit 41 of the charging station management server 4 may be configured to output, to the electric vehicle 5, an instruction to cancel disabling of the driving control function having the security risk when confirming the notification about matching, from the electric vehicle 5.

In this way, the charge control by the charging system 1 according to the present embodiment determines the presence or absence of the security risk to the driving control function of the electric vehicle 5, on the basis of the vehicle software configuration information 71b, and determines whether the second driving control function enables the traveling, and the electric vehicle 5 to be charged can avoid the security risk after the at least one driving control function having the security risk that is at least one driving control function having the security risk is disabled. Then, in the charge control according to the present embodiment, when the second driving control function enables the traveling of the electric vehicle 5 and the electric vehicle 5 can avoid the security risk after the at least one driving control function having the security risk is disabled, power supply to the electric vehicle 5 is permitted after the at least one driving control function having the security risk is disabled.

This configuration makes it possible to disable the driving control function of the electric vehicle 5 having the security risk upon power supply in the charging station, securing the safety of the electric vehicle 5. The configuration in which the power supply is permitted on condition that the driving control function having the security risk is disabled enables safe travel of the electric vehicle 5 obtaining power after charging. In other words, it is possible to protect the electric vehicle 5 connected to the charging facility 3 upon power supply, from the security risk arising from the electric vehicle 5.

Note that the technology according to the present embodiment can be appropriately applied to the charging system 1 according to the embodiments described above.

### (Fifth Embodiment)

The charging system 1 according to the present embodiment is similar to the charging system 1 according to the fourth embodiment except that the power supply process is started with the charge reservation as a trigger instead of vehicle detection. In other words, a difference between the charging system 1 according to the present embodiment and the charging system 1 according to the fourth embodiment is similar to the difference between the charging system 1a according to the first embodiment and the charging system 1 according to the third embodiment.

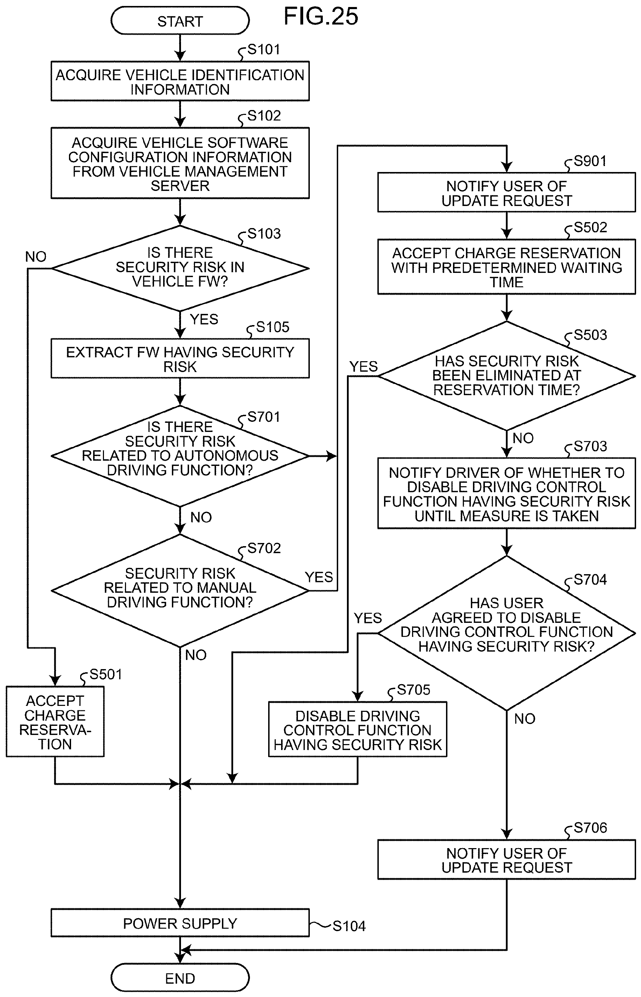

FIG. 25 is a flowchart illustrating an example of a power supply process triggered by the charge reservation, performed in the charge control unit 41 and the reservation management unit 43 according to a fifth embodiment. Here, a difference from the power supply process (see FIG. 23) according to the fourth embodiment will be mainly described.

In the process of FIG. 25, when it is determined that the vehicle FW of the electric vehicle 5 has no security risk (S103: No), the charge control unit 41 outputs the power supply notification indicating permission of power supply after the reservation management unit 43 accepts the charge reservation (S501), and power supply by the power supply apparatus 32 is performed (S104).

In the process of FIG. 25, when it is determined that it is the security risk related to the autonomous driving function or the manual driving function (S701: Yes and S702: Yes), the charge control unit 41 notifies the user of the electric vehicle 5 of the vehicle FW update request (S901). Thereafter, the reservation management unit 43 accepts the charge reservation with the predetermined waiting time (S502). In other words, when there is the security risk and when the electric vehicle 5 to be charged can avoid the security risk, the reservation management unit 43 sets the reservation time at which power supply is started with the predetermined waiting time. Furthermore, at the reservation time, the charge control unit 41 determines whether the security risk to the charging function has been eliminated (S503). When it is determined that the security risk to the charging function has been eliminated (S503: Yes), the process of FIG. 25 proceeds to processing of S104. In other words, the charge control unit 41 performs the first determination again by the reservation time, and when the determination result of the first determination indicates the absence of the security risk by the reservation time, power supply to the electric vehicle 5 is permitted without disabling the at least one driving control function having the security risk. Meanwhile, when it is not determined that the security risk to the charging function has been eliminated (S503: No), the process of FIG. 25 proceeds to the processing of S703. In other words, the charge control unit 41 performs the first determination again by the reservation time, and when the determination result of the first determination does not indicate absence of the security risk by the reservation time, the power supply to the electric vehicle 5 is permitted after the at least one driving control function having the security risk is disabled.

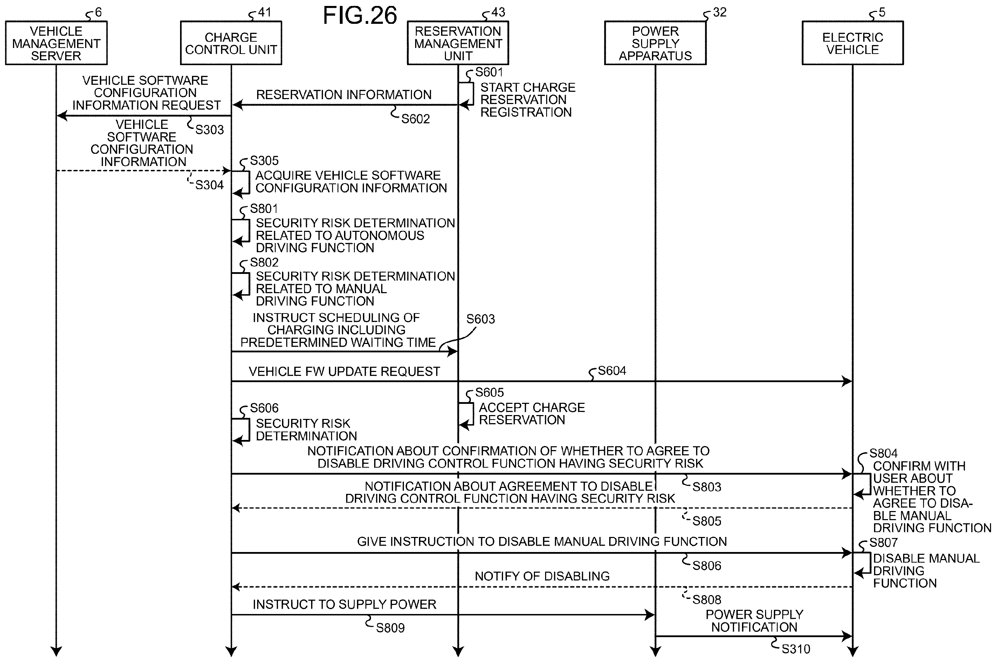

FIG. 26 is a sequence diagram illustrating an example of a power supply process triggered by the charge reservation, performed in the charging system 1 according to the fifth embodiment. Here, a difference from the power supply process (see FIG. 24) according to the fourth embodiment will be mainly described.

The reservation management unit 43 starts the charge reservation registration (S601). In addition, the reservation management unit 43 acquires the reservation information including at least the owner information 723 and the vehicle type 724, on the basis of the information input by the user of the electric vehicle 5 and the authentication information when the user logs in to the charge reservation registration service, and outputs the reservation information to the charge control unit 41 (S602). Here, it is assumed that the reservation information including the owner information 723 of "Owner002" and the vehicle type 724 of "Car-Model02" is output.

The charge control unit 41 of the charging station management server 4 outputs the vehicle software configuration information request requesting the vehicle software configuration information 71b and the vehicle management information 72b that correspond to the owner information 723 of "Owner002" and the vehicle type 724 of "Car-Model02", to the vehicle management server 6 (S303).

The information search unit 61 of the vehicle management server 6 refers to the vehicle management information 72b, on the basis of the owner information 723 of "Owner002" and the vehicle type 724 of "Car-Model02", as the vehicle identification information. Therefore, the information search unit 61 identifies that the vehicle FW version 725 currently applied to the electric vehicle 5 to be charged is "Ver.1.0".

In the security risk determination related to the autonomous driving function (S801) and the security risk determination related to the manual driving function (S802), upon determination of the presence of the security risks to the autonomous driving function and the manual driving function, the charge control unit 41 instructs the reservation management unit 43 to schedule charging including the predetermined waiting time (S603). In addition, the charge control unit 41 outputs the vehicle FW update request to the electric vehicle 5 (S604) and requests the driver to update the vehicle FW during the predetermined waiting time provided before the reservation time.

In response to an instruction from the charge control unit 41, the reservation management unit 43 accepts the charge reservation with the reservation time after the predetermined waiting time (S605). At the reservation time, the charge control unit 41 determines whether the security risk to the driving control function has been eliminated (S606), and outputs the notification about confirmation of whether to agree to disable the driving control function having the security risk, to the electric vehicle 5 in response to the determination that the security risk to the driving control function has not been eliminated (S803).

In this way, the charging system 1 according to the present embodiment performs the power supply process triggered by the charge reservation, and sets the reservation time with the predetermined waiting time, when the presence of the security risk to the driving control function is determined. This configuration makes it possible to provide an effect of updating the vehicle FW during the waiting time before the reservation time, in addition to the effects similar to those of the fifth embodiment. Therefore, according to the charging system 1 of the present embodiment, it is possible to further improve the safety of the charge control.

Note that the technology according to the present embodiment can be appropriately applied to the charging system 1 according to the embodiments described above. Note that the charging system 1 according to the present embodiment can be expressed as the charging system 1 according to the fourth embodiment to which the technology according to the third embodiment is applied.

Note that, in the embodiments described above, determination of "whether it is A" may be achieved by determining only "being A", may be achieved by determining only "being not A", or may be achieved by determining both thereof.

Programs executed on the devices of the charging system 1 according to the present embodiment are provided by being recorded in the form of installable or executable file, on a computer-readable recording medium, such as CD-ROM, FD, CD-R, or DVD.

In addition, the programs executed on the devices of the charging system 1 of the present embodiment may be configured to be stored on a computer connected to a network such as the Internet and provided by being downloaded via the network. In addition, the programs executed on the devices of the charging system 1 of the present embodiment may be configured to be provided or distributed via a network such as the Internet.

In addition, the programs executed on the devices of the charging system 1 of the present embodiment may be configured to be provided by being incorporated in ROM or the like in advance.

According to at least one embodiment described above, it is possible to protect the charging facility connected to the electric vehicle upon power supply, from the security risk arising from the electric vehicle.

While certain embodiments have been described, these embodiments have been presented by way of example only, and are not intended to limit the scope of the invention. These embodiments described herein may be embodied in a variety of other forms, furthermore, various omissions, substitutions and changes may be made without departing from the spirit of the invention. The accompanying claims and their equivalents are intended to cover such embodiments or modifications as would fall within the scope and spirit of the invention.

### (Supplementary notes)

The following technologies are disclosed from the above descriptions of the embodiments.

(A1) A charge control method used in a charge control device communicably connected to a charging facility including a power supply apparatus configured to charge an electric vehicle and a communication network configured to connect the power supply apparatus, the charge control method including:
performing, based on software information including at least firmware information of at least one electronic control device mounted on the electric vehicle,
   a first determination to determine presence or absence of a security risk of the electric vehicle to a charging function arising from firmware of the at least one electronic control device, and
   a second determination to determine whether the charging facility can avoid the security risk by degrading a function of the power supply apparatus;
determining, based on a determination result of the second determination, a degradation mode to degrade the function of the power supply apparatus when a determination result of the first determination indicates presence of the security risk; and
controlling power supply of the power supply apparatus to the electric vehicle in the determined degradation mode.

(A2) The charge control method according to (A1) described above, in which
the second determination includes a determination of whether the security risk is a first type of security risk that can be avoided by disconnecting the power supply apparatus from the communication network, and
when the security risk is the first type of security risk, power supply of the power supply apparatus to the electric vehicle is controlled in the degradation mode in which the power supply apparatus is disconnected from the communication network.

(A3) The charge control method according to (A1) or (A2) described above, including:
when a determination result of the first determination indicates the presence of the security risk and when the second determination indicates that the security risk can be avoided, setting power supply time at which power supply is started with a predetermined waiting time;
performing the first determination again by the power supply time;
when the determination result of the first determination becomes absence of the security risk by the power supply time, controlling power supply to the electric vehicle without degrading the function of the power supply apparatus; and
when the determination result of the first determination does not become the absence of the security risk by the power supply time, controlling power supply of the power supply apparatus to the electric vehicle in the degradation mode in which the power supply apparatus is disconnected from the communication network.

(A4) The charge control method according to any of (A1) to (A3) described above, including:
verifying that there is not an unauthorized modification in the power supply apparatus disconnected from the communication network;
when there is not the unauthorized modification, reconnecting the power supply apparatus to the communication network; and
when there is the unauthorized modification, rolling back the power supply apparatus to further verify whether there is an unauthorized operation, and when there is not the unauthorized operation, reconnecting the power supply apparatus to the communication network.

(A5) The charge control method according to (A4) described above, including
after completion of power supply to the electric vehicle from the power supply apparatus disconnected from the communication network, or after a state where the power supply apparatus is not connected to the electric vehicle is reached, verifying that there is not the unauthorized modification in the power supply apparatus.

(A6) The charge control method according to any of (A1) to (A5) described above, including
in the first determination, further determining, based on the software information, presence or absence of a security risk to at least one driving control function of the electric vehicle arising from firmware of the at least one electronic control device; and
when a determination result of the first determination indicates the presence of the security risk in a predetermined function of the at least one driving control function, and when the security risk is avoidable by disabling the predetermined function, permitting power supply of the power supply apparatus to the electric vehicle after disabling the predetermined function of the electric vehicle.

(A7) A charge control device communicably connected to a charging facility including a power supply apparatus configured to charge an electric vehicle and a communication network configured to connect the power supply apparatus, the charge control device including:
a determination unit configured to perform, based on software information including at least firmware information of at least one electronic control device mounted on the electric vehicle,
   a first determination to determine presence or absence of a security risk of the electric vehicle to a charging function arising from firmware of the at least one electronic control device, and
   a second determination to determine whether the charging facility can avoid the security risk by degrading a function of the power supply apparatus; and
a control unit configured to determine, based on a determination result of the second determination, a degradation mode to degrade a function of the power supply apparatus when a determination result of the first determination indicates presence of the security risk, and control power supply of the power supply apparatus to the electric vehicle in the determined degradation mode.

(A8) A program for causing a computer communicably connected to a charging facility including a power supply apparatus configured to charge an electric vehicle and a communication network configured to connect the power supply apparatus to execute:
performing, based on software information including at least firmware information of at least one electronic control device mounted on the electric vehicle,
   a first determination to determine presence or absence of a security risk of the electric vehicle to a charging function arising from firmware of the at least one electronic control device, and
   a second determination to determine whether the charging facility can avoid the security risk by degrading a function of the power supply apparatus;
determining, based on a determination result of the second determination, a degradation mode to degrade a function of the power supply apparatus when a determination result of the first determination indicates presence of the security risk; and
controlling power supply of the power supply apparatus to the electric vehicle in the determined degradation mode.

(B1) A charge control method used in a charge control device communicably connected to each of an electric vehicle and a power supply apparatus configured to charge the electric vehicle, the charge control method including:
performing, based on software information including at least firmware information of an electronic control device mounted on the electric vehicle,
   a first determination to determine presence or absence of a security risk to a plurality of driving control functions of the electric vehicle arising from firmware of the electronic control device, and
   a second determination to determine, when a determination result of the first determination indicates presence of the security risk, whether after at least one driving control function having the security risk from among the plurality of the driving control functions is disabled, a second driving control function from among the plurality of the driving control functions enables traveling and the security risk of the electric vehicle is avoidable; and
permitting power supply of the power supply apparatus to the electric vehicle after disabling the at least one driving control function when the second driving control function enables traveling and the security risk is avoidable after the at least one driving control function is disabled.

(B2) The charge control method according to (B1) described above, including:
when the second driving control function enables traveling and the security risk is avoidable after the at least one driving control function is disabled, outputting notification information indicating whether to disable the at least one driving control function to a driver; and
when acquiring notification information indicating agreement to disable the at least one driving control function from the driver, outputting instruction information for disabling the at least one driving control function to the electric vehicle.

(B3) The charge control method according to (B1) or (B2) described above, including:
when a determination result of the first determination indicates presence of the security risk and when the second determination indicates that the security risk is avoidable, setting power supply time at which power supply is started with a predetermined waiting time;
performing the first determination again by the power supply time;
when the determination result of the first determination becomes absence of the security risk by the power supply time, permitting power supply to the electric vehicle without disabling the at least one driving control function; and
when the determination result of the first determination does not become the absence of the security risk by the power supply time, disabling the at least one driving control function and permitting power supply of the power supply apparatus to the electric vehicle.

(B4) The charge control method according to any one of (B1) to (B3) described above, including:
when the second driving control function enables traveling and the security risk is avoidable after the at least one driving control function is disabled, outputting instruction information for disabling the at least one driving control function; and
when acquiring a notification indicating that the at least one driving control function has been disabled from the electric vehicle, permitting power supply of the power supply apparatus to the electric vehicle.

(B5) The charge control method according to any one of (B1) to (B4) described above, including:
in the first determination, further determining, based on the software information, presence or absence of a security risk of the electric vehicle to a charging function arising from firmware of the electronic control device;
when a determination result of the first determination indicates presence of the security risk to the charging function and when the security risk is avoidable by degrading a function of the power supply apparatus, determining a degradation mode to degrade the function of the power supply apparatus according to a type of the security risk; and
controlling power supply of the power supply apparatus to the electric vehicle in the determined degradation mode.

(B6) A charge control device communicably connected to each of an electric vehicle and a power supply apparatus configured to charge the electric vehicle, the charge control device including:
a determination unit configured to perform, based on software information including at least firmware information of an electronic control device mounted on the electric vehicle,
   a first determination to determine presence or absence of a security risk to a plurality of driving control functions of the electric vehicle arising from firmware of the electronic control device, and
   a second determination to determine, when a determination result of the first determination indicates presence of the security risk, whether after at least one driving control function having the security risk from among the plurality of the driving control functions is disabled, a second driving control function from among the plurality of the driving control functions enables traveling and the security risk of the electric vehicle is avoidable; and
a control unit configured to permit power supply of the power supply apparatus to the electric vehicle after disabling the at least one driving control function when the second driving control function enables traveling and the security risk is avoidable after the at least one driving control function is disabled.

(B7) A program for causing a computer communicably connected to each of an electric vehicle and a power supply apparatus configured to charge the electric vehicle to execute:
performing, based on software information including at least firmware information of an electronic control device mounted on the electric vehicle,
   a first determination to determine presence or absence of a security risk to a plurality of driving control functions of the electric vehicle arising from firmware of the electronic control device, and
   a second determination to determine, when a determination result of the first determination indicates presence of the security risk, whether after at least one driving control function having the security risk from among the plurality of the driving control functions is disabled, a second driving control function from among the plurality of the driving control functions enables traveling and the security risk of the electric vehicle is avoidable; and
permitting power supply of the power supply apparatus to the electric vehicle after disabling the at least one driving control function when the second driving control function enables traveling and the security risk is avoidable after the at least one driving control function is disabled.

(C1) A recording medium (computer program product) including the program according to (A8) or (B7) described above, the program being executed by a computer.

### EXPLANATIONS OF LETTERS OR NUMERALS

1 CHARGING SYSTEM
3 CHARGING FACILITY
31 CHARGING STATION MANAGEMENT TERMINAL
311 DETECTION UNIT
312 FIRST COMMUNICATION CONTROL UNIT
313 POWER SUPPLY APPARATUS MANAGEMENT UNIT
32 POWER SUPPLY APPARATUS
33 FACILITY COMMUNICATION NETWORK
34 VERIFICATION NETWORK
301 CONNECTION MEMBER
4 CHARGING STATION MANAGEMENT SERVER
41 CHARGE CONTROL UNIT
411 FIRST DETERMINATION UNIT
412 SECOND DETERMINATION UNIT
413 CHARGE CONTROL INSTRUCTION UNIT
414 STORAGE CONTROL UNIT
415 SECOND COMMUNICATION CONTROL UNIT
416 FIRST VERIFICATION UNIT
417 SECOND VERIFICATION UNIT
42 FIRST STORAGE UNIT
43 RESERVATION MANAGEMENT UNIT
44 DISPLAY UNIT
45 FIRST COMMUNICATION UNIT
5 ELECTRIC VEHICLE
51 IN-VEHICLE NETWORK
53 EXTERNAL COMMUNICATION I/F
54 POWER SUPPLY I/F
55 ECU
6 VEHICLE MANAGEMENT SERVER
61 INFORMATION SEARCH UNIT
62 SECOND COMMUNICATION UNIT
63 SECOND STORAGE UNIT
N EXTERNAL NETWORK

## Claims

1. A charge control method used in a charge control device communicably connected to each of an electric vehicle and a power supply apparatus configured to charge the electric vehicle, the charge control method comprising:
performing, based on software information including at least firmware information of an electronic control device mounted on the electric vehicle,
a first determination to determine presence or absence of a security risk to a plurality of driving control functions of the electric vehicle arising from firmware of the electronic control device, and
a second determination to determine, when a determination result of the first determination indicates presence of the security risk, whether after at least one driving control function having the security risk from among the plurality of the driving control functions is disabled, a second driving control function from among the plurality of the driving control functions enables traveling and the security risk of the electric vehicle is avoidable; and
permitting power supply of the power supply apparatus to the electric vehicle after disabling the at least one driving control function when the second driving control function enables traveling and the security risk is avoidable after the at least one driving control function is disabled.

2. The charge control method according to claim 1, comprising:
when the second driving control function enables traveling and the security risk is avoidable after the at least one driving control function is disabled, outputting notification information indicating whether to disable the at least one driving control function to a driver; and
when acquiring notification information indicating agreement to disable the at least one driving control function from the driver, outputting instruction information for disabling the at least one driving control function to the electric vehicle.

3. The charge control method according to claim 1 or 2, comprising:
when a determination result of the first determination indicates presence of the security risk and when the second determination indicates that the security risk is avoidable, setting power supply time at which power supply is started with a predetermined waiting time;
performing the first determination again by the power supply time;
when the determination result of the first determination becomes absence of the security risk by the power supply time, permitting power supply to the electric vehicle without disabling the at least one driving control function; and
when the determination result of the first determination does not become the absence of the security risk by the power supply time, disabling the at least one driving control function and permitting power supply of the power supply apparatus to the electric vehicle.

4. The charge control method according to claim 1, comprising:
when the second driving control function enables traveling and the security risk is avoidable after the at least one driving control function is disabled, outputting instruction information for disabling the at least one driving control function; and
when acquiring a notification indicating that the at least one driving control function has been disabled from the electric vehicle, permitting power supply of the power supply apparatus to the electric vehicle.

5. The charge control method according to claim 1, comprising:
in the first determination, further determining, based on the software information, presence or absence of a security risk of the electric vehicle to a charging function arising from firmware of the electronic control device;
when a determination result of the first determination indicates presence of the security risk to the charging function and when the security risk is avoidable by degrading a function of the power supply apparatus, determining a degradation mode to degrade the function of the power supply apparatus according to a type of the security risk; and
controlling power supply of the power supply apparatus to the electric vehicle in the determined degradation mode.

6. A charge control device communicably connected to each of an electric vehicle and a power supply apparatus configured to charge the electric vehicle, the charge control device comprising:
a determination unit configured to perform, based on software information including at least firmware information of an electronic control device mounted on the electric vehicle,
a first determination to determine presence or absence of a security risk to a plurality of driving control functions of the electric vehicle arising from firmware of the electronic control device, and
a second determination to determine, when a determination result of the first determination indicates presence of the security risk, whether after at least one driving control function having the security risk from among the plurality of the driving control functions is disabled, a second driving control function from among the plurality of the driving control functions enables traveling and the security risk of the electric vehicle is avoidable; and
a control unit configured to permit power supply of the power supply apparatus to the electric vehicle after disabling the at least one driving control function when the second driving control function enables traveling and the security risk is avoidable after the at least one driving control function is disabled.

7. A program for causing a computer communicably connected to each of an electric vehicle and a power supply apparatus configured to charge the electric vehicle to execute:
performing, based on software information including at least firmware information of an electronic control device mounted on the electric vehicle,
a first determination to determine presence or absence of a security risk to a plurality of driving control functions of the electric vehicle arising from firmware of the electronic control device, and
a second determination to determine, when a determination result of the first determination indicates presence of the security risk, whether after at least one driving control function having the security risk from among the plurality of the driving control functions is disabled, a second driving control function from among the plurality of the driving control functions enables traveling and the security risk of the electric vehicle is avoidable; and
permitting power supply of the power supply apparatus to the electric vehicle after disabling the at least one driving control function when the second driving control function enables traveling and the security risk is avoidable after the at least one driving control function is disabled.
